# EUROPÄISCHE PATENTSCHRIFT

(11) **EP 3 686 027 B1**
(45) Veröffentlichungstag und Bekanntmachung des Hinweises auf die Patenterteilung: **14.07.2021**
(21) Anmeldenummer: 19153855.2
(22) Anmeldetag: 27.01.2019
(51) Int. Cl.: B42D 25/405, B42D 25/21, B42D 25/378, G07D 7/20, G06K 9/00

(54) **VERFAHREN ZUM DRUCKEN VON AUTHENTIFIZIERUNGSKENNZEICHEN MIT EINEM AMPLITUDENMODULIERTEN RASTERDRUCK**
METHOD OF PRINTING AUTHENTICATION INDICATORS WITH AN AMPLITUDE-MODULATED HALF TONE
PROCÉDÉ D'IMPRESSION D'INDICES D'AUTHENTIFICATION PAR UNE IMPRESSION EN DEMI-TEINTE MODULÉE EN AMPLITUDE

(43) Veröffentlichungstag der Anmeldung: 29.07.2020
(73) Patentinhaber: U-NICA Systems AG, 7302 Landquart (CH)
(72) Erfinder: Franken, Klaus, 7206 Igis (CH)
(74) Vertreter: Liebetanz, Michael

(56) Entgegenhaltungen:
- WO-A1-2006/013037
- WO-A1-2015/067725
- DE-T2- 69 729 118
- US-B2- 9 681 020

## Beschreibung

### TECHNISCHES GEBIET

Die vorliegende Erfindung betrifft ein Verfahren zum Drucken von Authentifizierungskennzeichen durch Aufbringen eines mindestens amplitudenmodulierten Rasterdrucks in einer Detektionszone auf einen Gegenstand, wobei die bedruckte Fläche der Detektionszone aneinander grenzende Rasterzellen umfasst, in welchen Rasterzellen jeweils ein Rasterpunkt aus einer Matrix aus druckbaren Rasterelementen gedruckt wird.

### STAND DER TECHNIK

Das heutige Bedürfnis nach einem wirksamen Produktschutz gegenüber Nachahmungen geht weit über die bis vor wenigen Jahren noch als allein ausreichende Applikation von markanten visuellen Merkmalen hinaus. Insbesondere Hologramme hatten sich den Ruf erworben, als hochwertiger Schutz auszureichen. Angesichts von Zehntausenden weltweit verbreiteter Studios für die Herstellung und Reproduktion von Hologrammen hat sich der Wert von Hologramm-Applikationen auf Verpackungen stark relativiert. Ein Vergleich eines Originals einer Verpackung mit ihrer Fälschung entgeht selbst dem ungeschulten Auge nicht, während ein Fachmann eine Fälschung ohne einen Vergleich mit dem Original als solche erkennen kann.

Andere Sicherheitsmerkmale wie etwa die Verwendung lumineszierender Pigmente im Druck eines Schriftzugs gilt nicht als sicher, wobei viele klassische Merkmale als Zweitstufenmerkmale Hilfsgeräte wie etwa UV-Lampen im Beispiel der genannten lumineszierenden Merkmale nicht ständig verfügbar sind, um ein Produkt oder ein Dokument zu authentifizieren. Konsumenten wie auch professionelle Prüfer der Originalität eines Produktes möchten sich keiner speziellen Hilfsmittel bedienen müssen, um die Echtheit eines Produktes beurteilen zu können.

Als ubiquitäre Hilfsmittel sind faktisch nur Smartphones oder vergleichbare Geräte akzeptiert, wobei deren Möglichkeiten einer gewissen maschinellen Intelligenz sowie ihrer elektronischen Vernetzung sehr willkommen sind. Die auf diesen Geräten leicht installierbaren Anwendungsprogramme, die so genannten Apps, können unter Nutzung der am Smartphone, Tablet, etc. angebrachten Kamera und ggf. den weiteren Sensoren und Produkt erkennen, in einem gewissen Umfang analysieren und ggf. das Ergebnis das Servern zu Verfügung stellen, das eigene Authentizierungsergebnis mit anderen Daten aus dem Netz vergleichen oder ergänzende Daten herunterladen. Eng verbunden mit einem Authentifizieren via Smartphone ist das komfortable Herunterladen von ergänzenden Informationen, etwa Seriennummern, der Vorschlag passender Ersatzteile, etc., was allgemein unter dem Begriff "Augmented Reality" subsummiert wird.

In diesem Zusammenhang haben sich ein- und zweidimensionale Barcodes zu einem Quasi-Standard für die Erkennung eines Produktes oder seiner Verpackung entwickelt. Es gibt praktisch keine Verpackung, auf die nicht an irgendeiner Stelle einen Datencode aufgebracht ist. Viele Geräte von Originalherstellern benötigen sogar Apps, um deren vollständigen Funktionsumfang nutzen zu können. Aus diesem Umstand heraus hat sich die Ansicht verbreitet, dass ein Barcode, insbesondere ein zweidimensionaler Barcode ein guter Schutz gegenüber Fälschungen ist, da er doch zuverlässig die Identifikation eines einzelnen Produktes erlaubt. In der Tat liegt allein darin ein Irrtum, insofern ein Barcode an sich ein sehr robustes Merkmal bzw. eine sehr robuste Markierung ist, die leicht kopierbar ist und auch als Kopie ihre Dienste als Datenträger verrichtet bzw. einen lesbaren Link darstellt.

Damit stellt sich die Frage wie eine Verpackung oder ein Dokument gegenüber einem hochauflösenden Scan geschützt bzw. einem hochwertigen Druck geschützt werden kann. Daraus ergibt sich ein Bedürfnis nach einem Verfahren, den Druck auf einer Verpackung oder einem Dokument als Originaldruck erkenntlich zu machen. In fachkundigen Kreisen ist ein solches Verfahren kurz als "Copy Detection" bekannt. Für die Authentifizierung in der beschrieben Weise wurden diverse Konzepte vorgeschlagen und teilweise auch im Markt eingeführt.

Eines dieser Konzepte sind Druckmotive mit einer in Grafiken oder Bildern eingebetteten repetitiven Struktur. Die WO 99/35819 beschreibt ein Verfahren, bei dem zwei Bilder derart gerastert werden, dass sich ein kombiniertes Bild ergibt, wobei das zweite Bild innerhalb des ersten Bildes so eingebettet ist, dass es einerseits für das unbewaffnete Auge nicht sichtbar ist und andererseits mit einem mit der richtigen Frequenz kodierten optischem Hilfsgerät, ähnlich einer Lentikularlinse, oder auch auf elektronischem Wege offengelegt werden kann. Diese Lehre nutzt dabei den Umstand, dass die Rasterperiode eines Druckes ein repetitives Muster bildet. Es wurde vorgeschlagen, ein zweites Bild nach bestimmten Vorgaben zu rastern und dieses Raster mit dem Raster des Primärbildes so vereinigen, dass das Primärbild sichtbar und das Sekundärbild latent bleibt. Auf diese Weise lässt sich z. B. ein Schriftzug, ein Porträt oder ein Barcode im Primärbild verstecken. Im Fall des Barcodes ist auch eine elektronische Decodierung möglich, da ein Laserscanner quasi durch das Rastermuster des Primärbildes "hindurchsehen" kann, sofern er die richtige Position zum eingebetteten Barcode hat. Dem Bedürfnis nach einer Authentifizierung mit einem Smartphone genügt das Verfahren nicht. Die Manipulation des Rasters bleibt dem Auge des Fachmanns auch nicht ganz verborgen und ist bei qualitativ sehr hochwertigen mehrfarbigen Drucken nicht erwünscht.

Ganz ähnlich funktioniert das Verfahren gemäss EP-B-1 477 026, bei dem ein Primärbild mit einem Linienmuster auf der Basis eines zweiten Bildes so moduliert wird, dass das zweite Bild in dem ersten Bild versteckt werden kann und mit einem optischen Filter offengelegt werden kann.

Einen anderen frequenzorientierten Ansatz bietet die US-B-7,366,301, wonach gleich mehrere Ebenen eines Frequenzrasters übereinander gelegt werden. In diesen Fällen beruhen diese Muster auf phasenmodulierten Bilddaten. Auch in diesem Fall wird ein optischer Filter mit geeigneter Frequenz benötigt, um die eingebettete Information offenzulegen. Für jede Ebene wird hier ein Filter mit der passenden Frequenz benötigt, wobei jede der Ebenen als Träger für ein eigenes Wasserzeichen dient. Die Authentifizierung wird über die Entschlüsselung der Wasserzeichen aller Ebenen erreicht.

Auch die US-B-7,5122,449 nutzt ein verstecktes Bild als Basis für die Authentifizierung. In diesem Fall wird ein Bild mit einer Vielzahl von Parametern, z. B. Phasenverschiebungen kodiert. Die aus der gleichen Patentfamilie stammende US-B-7,561,308 beruht auch auf einem mindestens zweiten versteckten Bild. Um das versteckte oder die versteckten Bilder sichtbar werden zu lassen, wird ein Kontrollbild benötigt, dessen Rasterung mit einer bestimmten Frequenz und Orientierung vorgenommen wurde. Die Authentizierung wird durch einen pixelweisen Vergleich mit dem Kontrollbild vorgenommen.

Alle vorgenannten Konzeptvarianten setzen für die Authentizierung eines Originals die Integration mindestens einer zweiten Information voraus, wobei die zweite Information zum Beispiel ein Bild sein kann. Des Weiteren wird ein Verschlüsselungsschritt auf der Basis einer Frequenzmodulation eines Linienmusters oder Punktlinienmusters benötigt. Eine Fälschung ohne diese integrierte zweite (Bild-)Information fällt beim Authentifizierungsvorgang auf, jedoch für eine Copy Detection sind diese Verfahren nur bedingt verwendbar. Es ist denkbar, dass bei genügend hoher Auflösung von Scan und Nachdruck, die repetitiven Strukturen erhalten bleiben. Des Weiteren gelten die teils benötigten optischen Hilfsgeräte bzw. Filter als überkommen und bilden für einen Smartphone-orientierten Prozess für die Authentizierung bzw. Originalitätsnachweis bzw. eine Copy Detection eine unerwünschte Beschränkung. Es ist zwar prinzipiell möglich, ein Frequenzmuster mit einem Smartphone oder einem ähnlichen Gerät zu analysieren. Es bleibt aber noch der Nachteil, dass in allen Fällen eine zusätzliche Information - ein Bild oder eine Grafik - verschlüsselt und eingebettet werden muss. Wenig akzeptiert wird von Herausgebern von Dokumenten oder Markenherstellern, dass in den meisten Fällen die Bildmanipulation eben doch - quasi beim zweiten Blick - auffällt. Das in der oben erwähnten US-B-7,366,301 beschriebene Verfahren wird in der Praxis so angewendet, dass auf einer Verpackung ein Authentifizierungsfeld reserviert wird, das für den Betrachter wie Rechteck mit einem einheitlichen grobkörnigen Grau wirkt. Das Authentifizierungsfeld ist wie der zweidimensionale Barcode (QR-Code) ein zusätzliches grafisches Merkmal, dessen Zweck sich dem Betrachter bei vergrösserter Ansicht als offensichtliches Frequenzraster offenbart.

Eine Abkehr von den grafischen frequenzorientierten Methoden bietet die US-B-8,019,115, wenn auch Elemente der o. g. Ideen zu erkennen sind. Die US-B-8,019,115 reklamiert zur Authentifizierung ein tragbares Bildaufnahmegerät, das über einem ausgewählten, mit einem geeigneten Licht beleuchteten und vergrösserten Ausschnitt des Originalbildes positioniert wird und Bilddaten an ein Authentifizierungsmodul weiterleitet. Aus der Offenbarung geht auch die Verwendung eines vorgeschalteten optischen Elementes hervor. Das Originalbild kann auf der Basis einer Rasterung, einer optisch chiffrierten Grafik oder Schrift vorliegen.

Einen anderen Ansatz bieten Vorschläge zur Modifikation von auf praktischen allen Verpackungen und vielen Dokumenten vorhandenen QR-Codes. Die Autoren der WO-A-2015/067725 reservieren ein Informationsfeld innerhalb oder an einem QR-Code (in der Praxis in der Mitte des QR-Codes platziert), das sich durch eine eigene Struktur mit Subzellen mit Kantenlängen kleiner 50 µm ausweist. Dieses Informationsfeld bietet Platz eine zweite Information, ohne die erste Information des QR-Codes, die eigentliche Barcode-Information zu verändern oder unleserlich zu machen. Die zweite Information ist der Authentizierung dienlich und kann in einem gewissen Grad auch Copy Detection fungieren. Das Merkmal ist jedoch offensichtlich erkennbar und schützt nur die Originalität des QR-Codes.

Einen ähnlichen Ansatz bietet die US-B-9,681,020, die ebenfalls ein aus Zellen bestehendes Muster auf einem Dokument als Informationsträger anbietet. Auch dieses ist auffällig und verursacht für die Implementierung einen zusätzlichen Aufwand. Zur Verwendung als Copy Detection-Merkmal ist diese Art der Codierung nicht vorgesehen und bietet wenig Schutz gegenüber einem hochauflösenden Scan und Druck.

Eine weitere Variante eines nicht kopierbaren 2D-Barcodes wird mit der WO-A-2006/013037 präsentiert. Innerhalb des QR-Codes befinden sich Rasterzellen mit Rasterpunkten und Muster, die wiederum aus nach bestimmten Regeln aufgebauten Untermustern bestehen. Auf diese Weise lassen sich Informationsbits in den Rasterzellen hinterlegen und eine Copy Detection bewerkstelligen.

Die WO2015/130697 offenbart ein Verfahren zur Identifizierung eines Druckgutes durch eine Bildaufnahme, die Artefakte offenlegt, die unvermeidlich zusammen mit dem Druck auftreten. Das Verfahren ist insbesondere auf QR-Codes ausgerichtet und behandelt einen individuellen QR-Code damit als eine Art Fingerabdruck. Nachdem die gedruckte Markierung als digitaler Fingerabdruck registriert worden ist, ist natürlich eine Kopie nicht mehr möglich, da sich dabei weitere Artefakte einschleichen und den Fingerabdruck verändern. Diese Art des Kopierschutzes ist aber auf einzelne Exemplare eines Drucks bezogen und dient erfindungsgemäss zu Track & Trace-Zwecken. Eine Copy Detection in dem Sinne, dass eine Vielzahl von Druckexemplaren, z. B. in Form von gedruckten Faltschachteln, so kenntlich gemacht wird, dass sie sich von einer (illegalen) Kopie abhebt, ist es nicht.

Einen völlig anderen Weg schlägt die US-B-7,684,088 ein. In diesem Fall wird eine digitale Markierung auf einer gedruckten oder geprägten Oberfläche aufgebracht, die sich durch Auswahl einer Menge von Pixeln mit einer Grösse höchstens 300 dpi (also kleiner als 80 µm) auszeichnet. Die Pixel der digitalen Markierung werden nach pseudo-zufälligen Kriterien modifiziert und sodann auf einem gedruckten sichtbaren Element aufgebracht. Die scheinbar ungeordnet verteilten Pixel sind auf dem Originaldruck erkennbar, aber nicht mehr auf einer Kopie in der Form erhalten, dass die digitale Markierung feststellbar ist. Diese Art des Kopierschutzes ist insbesondere dann wirksam, wenn die Pixelfarbe der digitalen Markierung der Farbe des überdruckten Untergrundes ähnelt. Beispielsweise hat sich eine gelbe Farbe der Pixel sich auf einem weissen Hintergrund als effektiv erwiesen. Problematisch bis unmöglich wird das Verfahren, wenn der Untergrund mehrfarbig ist, verschiedene Farben und Farbtöne aufweist. In diesen Fällen kann die digitale Markierung vom darunter liegenden Druck kaum differenziert werden.

Keine der beschriebenen Konzepte löst das Problem, einen in hoher Qualität hergestellten Originaldruck eines mehrfarbigen Bildes mit einem beliebigen Motiv von seiner Kopie zu unterscheiden, ohne in irgendeiner Weise die Bilddaten vor dem Druck zu manipulieren bzw. mit zusätzlichen Daten zu ergänzen. Bekannte Verfahren zur Integration von Wasserzeichen sind auf das Problem als Lösung nicht anwendbar, da es bei der Copy Detection nicht um den Transport von eingebetteter Information geht. Desgleichen sind digitale Fingerabdruckverfahren, die auf die Identifikation und Authentifizierung von Einzelstücken bzw. -dokumenten ausgerichtet sind, nicht auf das Problem des Originalitätsnachweises von Massendruckware adaptierbar.

### DARSTELLUNG DER ERFINDUNG

Ausgehend vom genannten Stand der Technik ist es eine Aufgabe der vorliegenden Erfindung, ein Verfahren anzugeben, um es einer Person zu ermöglichen. einen in hoher Qualität hergestellten Originaldruck eines mehrfarbigen Bildes mit einem beliebigen Motiv von seiner Kopie zu unterscheiden, ohne für einen Betrachter in irgendeiner Weise die von ihm visuell erkennbaren Bildelemente vor dem Druck zu verändern wie beispielsweise diese mit zusätzlichen vom Betrachter mit blossem Auge visuell erkennbaren Artefakten zu ergänzen.

Diese Aufgabe wird erfindungsgemäss durch das in Anspruch 1 definierte Verfahren gelöst.

Man kann auch anders formulieren, dass das in der Detektionszone ausser für die Tonwerte 0% und 100% in vorbestimmter Weise für eine Vielzahl der möglichen Tonwerte eines jeweiligen zu druckenden Rasterpunktes dem zugeordneten vorbestimmten Rasterberg eine asymmetrische Verteilung der Rasterelemente zugewiesen wird.

Die Modifikation des Matrixbildes ist dabei so vorzusehen, dass bei einer Fotografie einer Detektionszone einer solchen Verpackung, mit einer ausreichenden Auflösung, die Form der Rastermatrix und des sich aus den Rasterelementen ergebenden Rasterpunktes erkannt werden kann. Bei der Erstellung einer Kopie-Druckvorlage von einem abfotografierten Original durch einen Dritten, der kopierte Verpackungen erstellt, ergeben sich Abweichungen des Druckbildes der so bedruckten Verpackung, so dass diese Abweichungen von einem entsprechenden Deskriptorprogramm als Kopie und somit als Fälschung erkannt werden können.

Das Verfahren kann auch aus einer Kombination aus amplitudenmodulierten Rasterdruck und frequenzmoduliertem Rasterdruck aufgebaut sein. Der Rasterberg gibt in der Auflösung seiner Ebene die maximal mögliche Anzahl von Tonwerten zwischen 0% und 100% vor. Dabei kann der Druck in einen Druck in einer oder mehreren Detektionszonen auf dem Gegenstand und dem verbleibenden Druckbereich unterschieden werden. Der verbleibende Druckbereich wird im RIP nach dem Stand der Technik, insbesondere mit punktsymmetrischen Rasterpunkten oder auch Ellipsen etc. bedruckt. Mindestens in der Detektionszone werden in den aneinander grenzenden Rasterzellen jeweils einzelne Rasterpunkte aus einer Matrix aus druckbaren Rasterelementen gedruckt, bei denen in vorbestimmter Weise für eine Vielzahl von Tonwerten von jeweiligen zu druckenden Rasterpunkten aus dem zugeordneten vorbestimmten Rasterberg eine gegenüber mindestens einem Tonwert in vorbestimmter Weise abweichenden Symmetrie der zu druckenden Rasterelemente zugewiesen werden, so dass diese unterschiedlichen Rasterpunkte zur Überprüfung festgestellt werden können.

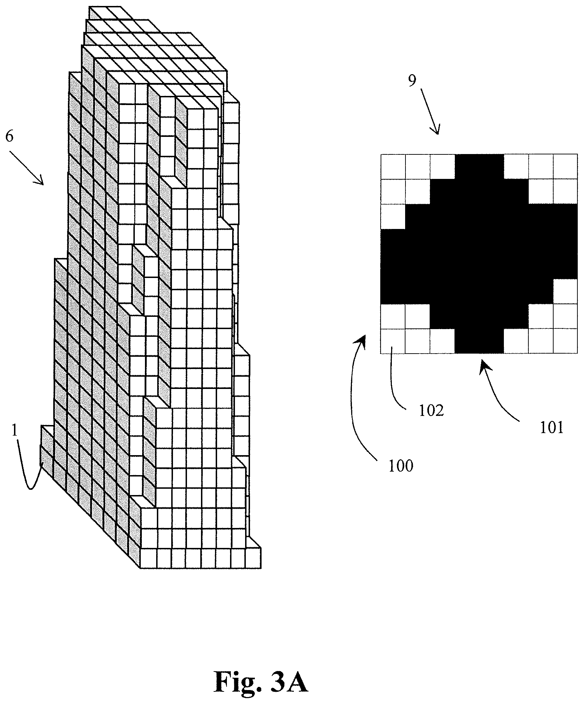

Für den Erhalt der Entscheidung, ob ein Rasterpunkt zu drucken ist oder nicht, bestehen zwei grundsätzliche Möglichkeiten: Die Schwellwert-Matrix oder eine Nachschlagetabelle. Beim ersten Verfahren werden ,Schwellwerte' in einer Matrix gespeichert und mit dem Tonwert des Bildes an der entsprechenden Stelle verglichen. Diese Schwellwert-Matrix sieht wie eine Berglandschaft aus und führt zum Begriff des Rasterberges. Ist der Tonwert der Vorlage größer als der Vergleichswert in der Matrix, so wird das entsprechende Pixel belichtet, andernfalls wird es nicht belichtet. Diese Vergleichsoperation wirkt, als ob Schnittebenen durch den Rasterberg gelegt werden. Bei der zweiten Realisierung wird für jede mögliche Tonwertebene ein entsprechendes Bitmuster gespeichert. Gerastert wird, indem für den Tonwert die dazugehörige Ebene im Speicher gesucht und das Bitmuster direkt ausgegeben wird. Die Querschnittsbilder der Fig. 3A bis 3K sind solche Rasterbergebenen.

Der Begriff Tonwert (von 0 bis 100%) (englisch: tonal value) bedeutet eine Flächendeckung im Druck gegenüber zum Beispiel einem Datenwert von 0 bis 100% bei Flächendeckung in einer entsprechenden Datei eines Bildes oder eines Films. Dabei kann bei einem Druck aus Datenwerten eine Tonwertkorrektur vorgenommen werden, in der Helligkeit, dem Kontrast oder des Gamma-Werts. Diese geschieht zumeist auf Grund einer Tonwertzunahme (englisch dot gain oder tonal value increase).

Dabei kann insbesondere eine Vielzahl von Tonwerten gegenüber der Punktsymmetrie der Tonwerte von 0% und 100% abweichen, so dass eine Vielzahl von Halbtönen mit diesen asymmetrischen Rasterpunkten gedruckt werden können.

Die Verteilung der Rasterelemente für einen vorbestimmten Tonwert in der Matrix einer Rasterzelle kann insbesondere aus einer Verteilungs-Gruppe ausgewählt werden, die die interessantesten asymmetrischen Verteilungen umfasst. Dazu gehören das Bedrucken einer oder zwei gegenüberliegenden Ecken einer Rasterzelle, einer Randlinie einer Rasterzelle, einem C, was auch als Kombination von drei Randlinien realisiert sein kann, einem L oder zwei sich in einer Ecke treffenden Randlinien, einem T oder einer Randlinie mit einem Mittelsteg oder eine andere nicht punktsymmetrische und nicht achsensymmetrische Druckform.

Die Verteilung der Rasterelemente in einem Rasterberg kann sich von dem Tonwert 100% zum Tonwert 0% von dem punktsymmetrischen Volldruck über eine, eine bestimmte Abänderung oder Asymmetrie aus der Verteilungs-Gruppe aufweisende Druckform hin zu mindestens einer, eine zu dieser erstgenannten unterschiedlichen Abänderung aus der Verteilungs-Gruppe aufweisende Druckform verändern, also ein Aushöhlen der Druckform zu einem U oder C und einer Deformation von diesem über ein T zu einer Randlinie, die dann bei einem Tonwert von wenigen Prozent in einem Rastelement in einer Ecke oder an der Seitenlinie führt.

Es können auch zwei oder mehr Detektionszonen vorgesehen sein, wobei die Rasterberge für die gleiche Farbe in jeweils zwei Detektionszonen gleich oder unterschiedlich zueinander sind. Die Detektionszonen können auch für andere Farben aus dem Farbenraum des Druckes vorgesehen werden. Die Detektionszonen können auch benachbart angrenzend zueinander sein.

Die Rasterberge für unterschiedliche Farben können gleich oder unterschiedlich zueinander sein, wobei basierend auf den Druckverfahren für solche unterschiedlichen Farben im Wesentlichen die letzten beiden Farbaufträge zum Einsatz kommen.

Mit dem Druckverfahren ist natürlich ein in Anspruch 9 definiertes Authentifizierungsverfahren für einen nach der Erfindung bedruckten Gegenstand verbunden. Dieses umfasst das Bereitstellen eines portablen Bildaufnahmegerätes mit einem Mikroprozessor zur Ausführung eines Authentifizierungsprogrammes. Dabei kann es sich in der Regel um ein Smartphone oder ein Tabletcomputer handeln. Diesem werden der sich aus Rasterbergdaten vorherbestimmten sich ergebenden Druckbildern für eine vorbestimmte Anzahl von Rasterpunkten des bedruckten Gegenstandes aus einer Detektionszone mit einem vorbestimmten Tonwert bereitgestellt, üblicherweise in Form einer Datenbank, die im Speicher des Smartphones gespeichert oder online abfragbar ist. Es kann sich dabei um Schwellwerte für eine 3D-Kurve eines Rasterberges oder um eine Nachschlagetabelle für einzelne Tonwert-Ebenen handeln. Es können auch die Ergebnisse der Aufnahme und Auswertung des Druckbilds für einen nachfolgenden Vergleich auf einem Server der Betreiberin übermittelt werden, um dieser auch gleich die Möglichkeit der Detektion von Kopien zu ermöglichen. Ansonsten kann das bereitgestellte Computerprogramm zum Vergleichen von den aufgenommenen Rasterpunkten mit dem sich aus den Rasterbergdaten vorherbestimmten Druckbildern für den gleichen Tonwert im Smartphone ausgeführt werden, wobei das Verfahren die weiteren Schritte des Aufnehmens eines Bildes einer Detektionszone des bedruckten Gegenstandes, des Auswählen einer vorbestimmten Anzahl von Rasterpunkten in der besagten Detektionszone, des Vergleichens des aufgenommenen Druckbildes dieser Rasterpunkte mit dem sich aus den Rasterbergdaten vorherbestimmten Druckbildern für den gleichen Tonwert und Entscheiden auf der Basis des Vergleichs, ob ein Originalausdruck auf dem Gegenstand vorliegt oder nicht, umfasst. Dieser Vergleich kann wie gesagt auch remote auf dem Server des Computerprogrammlieferanten ablaufen, so dass keine Datenbankdaten im Smartphone vorliegen oder übertragen werden müssen. Dann müssen lediglich vorbestimmte Gruppen von Rasterpunkten gespeichert sein oder können ebenfalls online abgerufen werden.

Bei dem Authentifizierungsverfahren können zufällig oder vorbestimmt unterschiedliche zu vergleichende Rasterpunkte aus der Detektionszone ausgewählt werden.

Diese Erfindung liefert damit einen Schutz von Dokumenten und Waren gegenüber unerlaubter Reproduktion, Fälschung, Verfälschung und Missbrauch derselben, beispielsweise durch Täuschung von Kunden mit gefälschten Waren und Garantiedokumenten oder Nutzung illegaler Vertriebswege. Insbesondere ist die Erfindung auf Fälschungen mit illegal gescannten und nachgedruckten Dokumenten und Verpackungen von Markenwaren wie z. B. Ersatzteile oder Genussmittel namhafter Hersteller ausgerichtet.

Mit anderen Worten ist es Aufgabe der vorliegenden Erfindung, eine illegale Kopie eines Dokumentes oder einer Verpackung erkenntlich zu machen, ohne das sichtbare Merkmale, etwas grafische Symbole wie Logos auf der Basis von Vektordateien, Fonts oder Pixeldateien, eigens zu diesem Zweck auf dem Dokument oder der Verpackung in auffälliger Art und Weise angebracht werden. Andererseits muss ein Bild auf dem Originaldruck so erhalten bleiben, dass die grafische Qualität des Bildes durch die erfindungsgemäss hinzugefügten Authentizierungsmerkmale nicht verschlechtert wird. Für Logos oder aufgebrachte Bilder bestehen im Allgemeinen strikte Vorgaben, z.B. Marketingvorgaben, was Grösse oder andere grafischen Dimensionen oder die Farbgebung betrifft.

Verfahren nach dem Stand der Technik weisen diesbezüglich Schwächen auf, da mehr oder weniger auffällig abgesicherte Dokumente oder Verpackungen eingebrachte Merkmale auf weisen, die für einen Eingeweihten entweder visuell gut erkennbar sind, beispielsweise frequenzmodulierte Linien- oder Pixelfolgen, oder durch eine mangelhafte fotografische Qualität eines sichtbaren Bildes auffallen oder bei illegalem Kopieren auf die Kopie übertragen werden, quasi gegenüber der gewünschten Strukturveränderung des Bildaufbaus zu robust sind. Für das Erkennen einer illegalen Kopie bzw. das Authentifizieren eines Originals auf dem Gebiet des Dokumenten- und Produktschutzes wurde auch der Begriff Copy Detection eingeführt und im Folgenden so verwendet. Die Erfindung berücksichtigt, erstens, die Forderung nach Erhalt der üblich hohen Bildqualität, mit Druckauflösungen von z. B. 40 bis 150 Linien/cm, bevorzugt 70 bis 130 Linien/cm, insbesondere bevorzugt 80 bis 120 Linien/cm; wobei letztere Auflösung einem hochwertigen Offsetdruck entspricht. Die Erfindung berücksichtigt, zweitens, die Forderung nach Verzicht von visuell auffälligen Markierungen auf dem Dokument bzw. der Verpackung und schlägt, drittens, Verifikationsverfahren für die zu schützenden Bilder vor, die unter Anwendung eines Smartphones oder ähnlichen Gerätes durchgeführt werden können. Die Lösung der Aufgabe beruht auf einer Besonderheit des Raster Image Process (RIP) Managements am Ende der Druckvorstufe, was die Bereitstellung der Daten für den Plattenbelichter bzw. für die Druckwerke einschliessen kann. Für die direkte Ansteuerung des Belichters bzw. die Druckwerke haben sich die Begriffe Computer-to-Plate bzw. Computer-to-Press (beides kurz als CtP bezeichnet) eingebürgert.

Sämtliche erstellten Pixel- und Vektorgrafiken sowie Schriften werden im Zuge des Rasterbildprozesses in Rasterpunkte umgewandelt. Die Entsprechung eines Grau- oder Halbtons ist Farbbedeckung auf dem Drucksubstrat. Diese wird erreicht durch die Grösse der Rasterpunkte (Amplitudenrasterung) oder Dichte der Rasterpunkte (Frequenzrasterung), letztere meistens in Form einer stochastischen Punktverteilung. Mischformen von Amplituden und Frequenzrasterung sind dabei nicht unüblich. Mögliche Mischformen sind Frequenzrasterung im Tief- und Helltonbereich mit einer Amplitudenrasterung für helle Mitteltöne oder eine Frequenzrasterung mit eingebetteten amplitudenmodulierten Rasterzellen. Bei der Amplitudenrasterung ist der kleinste druckbare Punkt ein Rasterelement, das wiederum innerhalb einer definierten Rasterzelle zusammen mit anderen druckbaren Rastelementen den sichtbaren Rasterpunkt erzeugt. Sofern alle Rasterelemente innerhalb einer Rasterzelle druckende Elemente sind, beträgt der Tonwert 100%, was einem Vollton entspricht. Ein geringerer Tonwert führt zu helleren Tönen, den Grau- bzw. Halbtönen. Rasterzellen bestehen üblicherweise aus Rasterelement-Matrizes von 8x8 bis 16x16 Rasterelementen, wobei diese nicht zwangsläufig quadratisch oder rechteckig sein müssen, sondern in Abhängigkeit vom Rasterwinkel eine andere Form aufweisen können. Eine Rasterzelle von 16x16 Rasterelementen kann demnach 254 Grautöne inkl. der Vollfarbe darstellen, was den Ansprüchen des zeitgemässen Qualitätsdrucks nicht genügt. Ein Graukeil setzt sich üblicherweise aus mindestens 1024 Grauwerten zusammen, kann aber auch mehr Halbtöne, bis 4096 Halbtöne enthalten. Um der Forderung nach einem grösseren Grauwertspektrums zu genügen wird eine Rasterung nach oben beschriebenem Muster durch weitere RIP-Verfahrensschritte ergänzt. Dazu gehört die Gestaltung von "Rasterbergen" bzw. "Schwellwertgebirgen", die ein wesentliches Element der vorliegenden Erfindung sind.

Im Rasterspeicher wird für jedes Rasterelement ein Grauwert aus dem verfügbaren Spektrum von bis zu 4096 Grauwerten (mehr Werte sind theoretisch möglich) hinterlegt. Ein Rasterelement ist dadurch gekennzeichnet ist, dass es das kleinste druckende Element, z.B. ein Laserpunkt des Laserbelichters, darstellt und die Eigenschaft aufweist, dass es entweder druckt, also Farbe auf das Substrat aufbringt, oder nicht druckt. Aus diesem Grund müssen Schwellwerte für die Halbtöne bzw. Grauwerte definiert werden, ab deren Überschreiten ein Rasterelement Farbe annimmt und damit druckend wirkt oder nicht. Die Summe aller Schwellwerte der Rasterelemente innerhalb der Rasterzelle bildet - visualisiert dargestellt - einen «Rasterberg» bzw. ein «Schwellwertgebirge», das für jeden Grauwert eine Rasterpunktform beschreibt. Die zugrunde liegende Schwellwertmatrix kann z. B. 128x128 Rasterelemente enthalten und aus mehreren Rasterbergen bestehen. Man kann sich den Rasterberg auch vorstellen als ein Auftürmen von Rasterpunkten von abnehmender Grösse angefangen vom Vollton bis zu einem einzelnen druckenden Rasterelement. Bekannte Rasterpunktformen sind rund, quadratisch-rund, rund oder ellipsoid, was einen mehr oder weniger symmetrisch geformten Rasterberg voraussetzt.

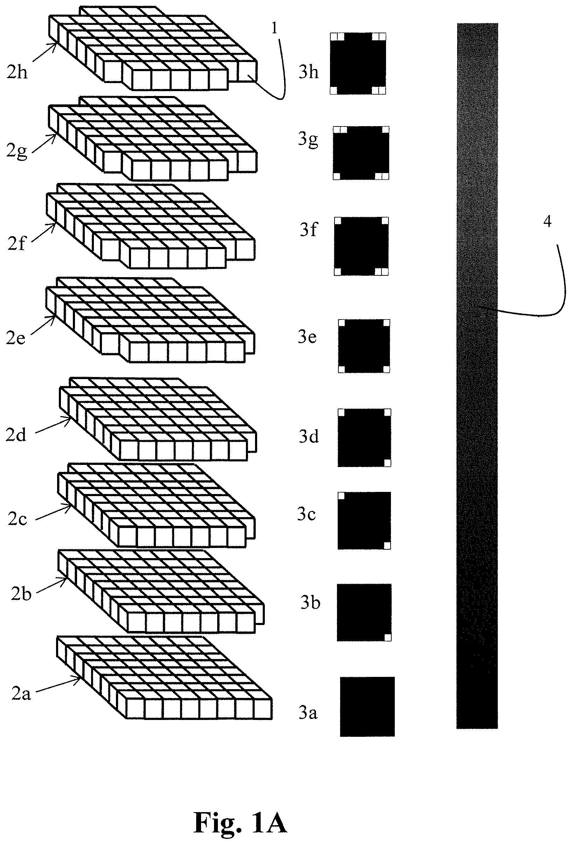

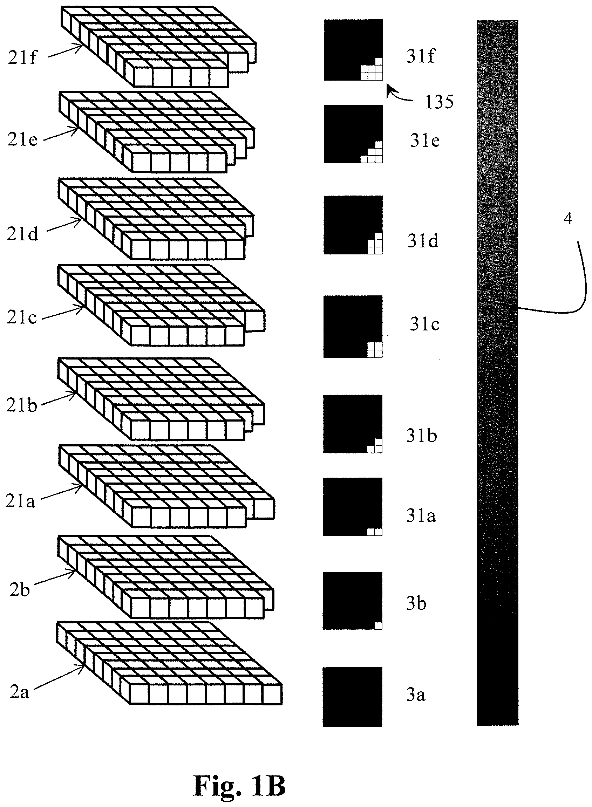

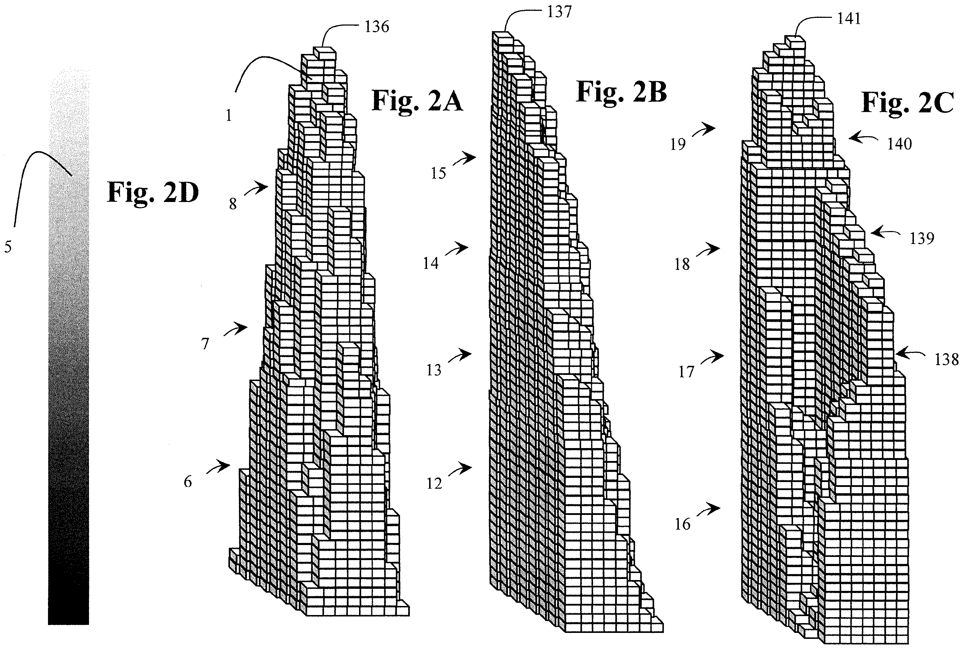

Die Figs. 1A und 1B beschreiben die ersten acht Rasterebenen einer 8x8-Rasterzelle. Der nach oben abnehmende Tonwert wird vom unbewaffneten Auge durch die Integrationswirkung des Auges als immer heller werdender Grauton wahrgenommen, der als nach oben heller werdenden Graukeil den Zeichnungen daneben gestellt ist, wobei die Ebenen auf gleicher Höhe zum gleichen Grauton führen. Der Aufbau des Rasterberges folgt der Regel, dass von einer Rasterebene zu darüber liegenden jeweils mindestens ein druckendes Rasterelement wegfällt. Beispiele für Rasterberge unterschiedlicher Geometrie finden sich in den Figs. 2A bis 2C, wobei in allen drei Fällen eine Rasterzellengrösse von 8x8 Rasterelementen gewählt wurde. Fig. 2D zeigt den zu den Figs. 2A bis 2C korrespondierenden Graukeil. Zusammen mit Rasterbergen benachbarter Rasterzellen können im Ergebnis Grautöne aus einem grösseren Spektrum dargestellt werden. Es zeigt sich das asymmetrische Rasterberge bei unterschiedlichen Grautönen sehr unterschiedliche Rasterpunktformen aufweisen können. Schnitte durch die Rasterberge bei unterschiedlichen Grautonwerten zeigen die Form des entsprechenden Rasterpunktes. Die Fig. 3A bis 3K demonstrieren die Form der Rasterpunkte in Abhängigkeit von der Höhe der Schnitte durch die Rasterberge, die in den Figs. 2A bis 2C als Ganzes dargestellt sind. Die von den üblicherweise symmetrischen Rasterpunktformen (rund-quadratisch, rund, ellipsoid) abweichenden Rasterpunkteformen eines asymmetrischen Rasterberges in Form eines Balkens, einer L- oder U-Form, etc. weisen unter Erhalt des vorgegebenen Grautons auf mikroskopischer Ebene über viele Rasterzellen hinweg betrachtet ein charakteristisches Muster auf, das quasi als Fingerabdruck für den Originaldruck steht. Das mit einer solchen Druckvorlage gedruckte Original weicht naturgemäss von der Druckvorlage, z. B. der gelaserten Druckplatte für den Offsetdruck, ab, insofern die gedruckten Punkte aufgeweitet und verschwommener erscheinen. Das Original behält sein charakteristisches Rasterpunktmuster für Grauwerte im Bereich von 40 bis 90%, bevorzugt 50 bis 80% bei. Das so erzeugte Rasterpunktmuster im mittleren bis mittelhellen Grautonbereich stellt die Basis für den folgenden Authentifizierungsschritt dar. Ein Scan des Originaldrucks und der Ausdruck des Scans führen zu einer erkennbaren Nivellierung der Rasterpunktformen, sodass die (illegale) Kopie nicht mehr das charakteristische Rasterpunktmuster aufweist

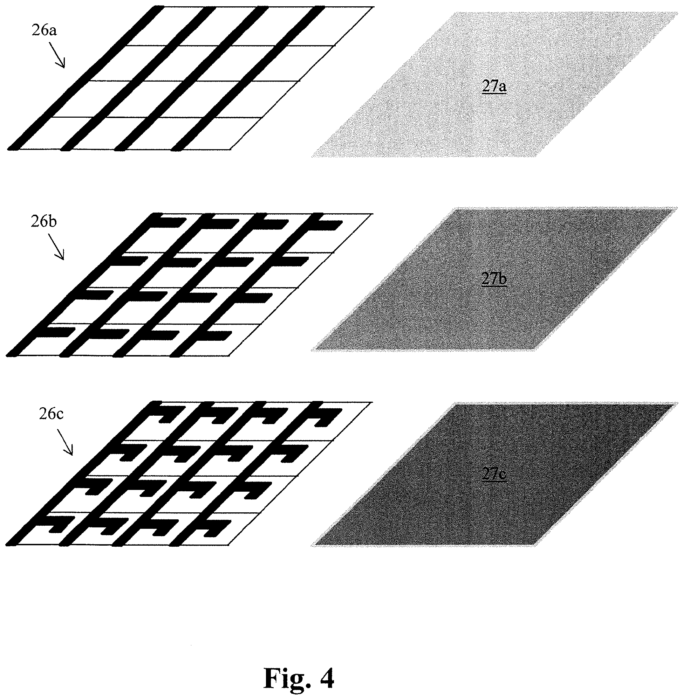

Die Grundfarben eines Farbdrucks werden im üblichen Raser-Image-Prozess mit unterschiedlichen Rasterwinkeln dargestellt. Die unterschiedlichen Farben eines mehrfarbigen Bildes, z. B. Cyan, Magenta, Gelb, Schwarz, Sonderfarben, etc., werden mit jeweils anderen Rasterwinkeln im Druckbild eingefügt. Fig. 4 zeigt eine Repräsentation eines Teilbildes bestehend aus jeweils 16 Rasterzellen mit schwarzer Farbe und einem zugehörigen Rasterwinkel von 45°, wie er z. B. in den bekannten Rastersystemen «RT classic» oder «RT Y45 K fine» vorkommt. Die Bezeichnungen für die verschiedenen Rastersysteme sind dem Fachmann bekannt. Im Gegensatz zu den üblichen symmetrischen Rasterpunktformen werden die unterschiedlichen Grautöne im Beispiel von Fig. 4 durch asymmetrische Rasterpunktformen erzeugt. Der visuell wahrnehmbare Grauton ist in dieser Darstellung ebenfalls dargestellt. Der Grauton wird allein durch den Tonwert der Farbe bestimmt, wobei im Beispiel von Fig. 4 statt der üblichen symmetrischen, zumeist runden, Rasterpunkte asymmetrische Rasterpunktformen verwendet werden. Der korrespondierende Grauton aller drei dargestellten Punktformen kann mit dem gleichen Rasterberg erzeugt werden. Es ist aber auch möglich, verschiedene Rasterberge in benachbarten Rasterzellen zu definieren, was verschiedene Rasterpunktformen bei gleichem Tonwert, also gleichem Grauton erlauben würde. Das gleiche Rasterverfahren lässt sich natürlich auf jeden Farbkanal übertragen. Im Fall, dass mehrere Farbkanäle der Druckvorlage eine Modulation der Rasterpunktformen in der beschriebenen Weise aufweisen sollen, ist es von Vorteil, dass sich insbesondere die zugehörigen Rasterwinkel deutlich voneinander unterscheiden.

Auf diese Weise sind demnach nicht nur monochrome Originaldrucke bestehend aus Grautönen oder Halbtönen einer Grundfarbe eines Farbraumes oder einer Sonderfarbe, z. B. einer bestimmten Pantonefarbe, authentifizierbar. Es ist auch möglich zwei, drei und mehr Farben mit einer asymmetrischen Rasterung im gleichen Druck darzustellen. Grundsätzlich lässt sich ein mehrfarbiges Bild in fotografischer Qualität auf diese Weise generieren.

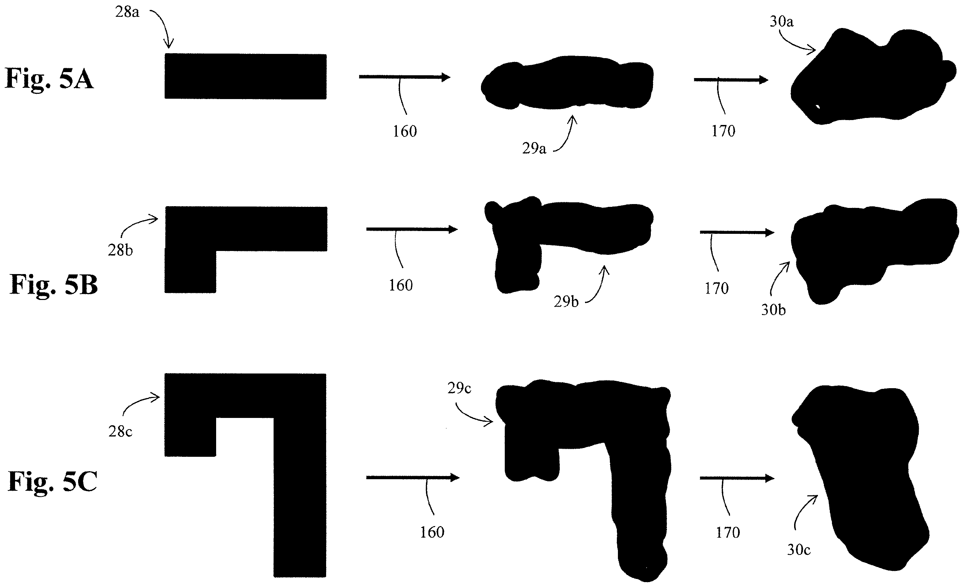

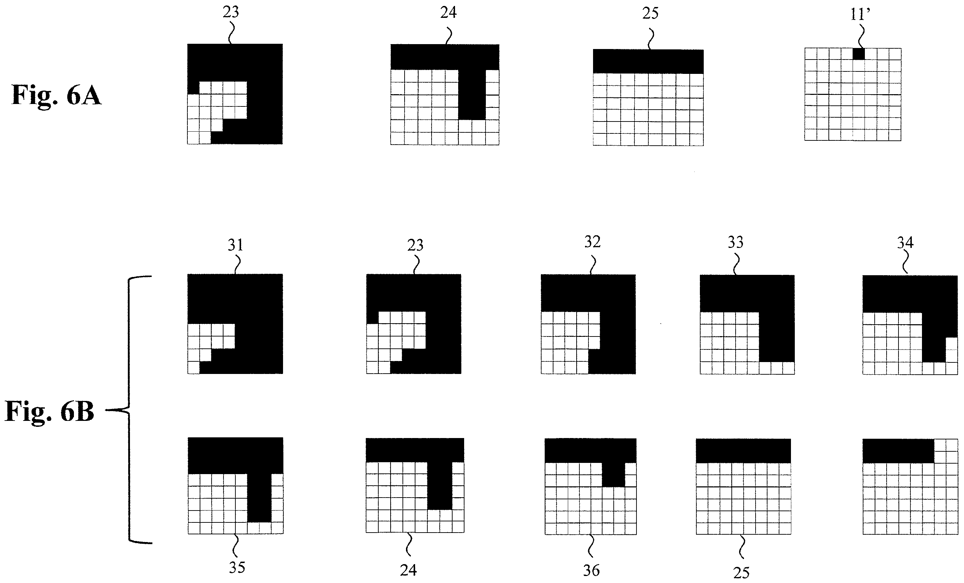

Eine im Raster-Image-Prozess erzeugte Rasterpunktform wird beim Druck aufgrund von verschiedenen Einflüssen wie z. B. das Fliessverhalten der Druckfarbe nicht in der gleichen geometrischen Qualität auf das Drucksubstrat übertragen. Die gedruckten Rasterpunkte sind jedoch noch von solcher Qualität, dass eine Mustererkennungssoftware die Umrisse der Rasterpunkte dem Original zuordnen kann. Ein Scan des Originaldrucks und ein folgender Ausdruck führt jedoch zu einer weiteren Verformung, die eine völlig irreguläre Gestalt des Rasterpunktes zum Ergebnis hat. Fig. 5A bis Fig. 5C zeigt beispielhaft Rasterdruckpunkte im Originaldruck und auf einer Kopie. Die Authentifizierung des Originals beruht quasi auf dem Verlust der Strukturinformation, die in Form von Rasterpunktformen in einer Vielzahl von Rasterpunkten hinterlegt ist. Die Authentifizierung kann prinzipiell an allen Orten in einem gedruckten Bild durchgeführt werden. Bevorzugt werden jedoch eine oder mehrere vorbestimmte Zonen, wobei die erfindungsgemässe Rasterung dann nur in diesen Zonen vorgenommen werden muss. Bildbereiche, die nicht für die Authentizierung vorgesehen sind, können mit üblichen Verfahren gerastert werden. Bei der Auswahl der Authentifizierungszonen ist zu berücksichtigen, dass vor allem deutliche Änderungen der Halb- bzw. Grautöne zur signifikanten verschiedenen Rasterpunktformen führen sofern für alle Halb- bzw. Grautöne die gleiche Rasterberggeometrie verwendet wird. Weniger wünschenswert für die Wiedererkennung der Rasterpunktformen sind Halbtonverläufe mit einem eher weichen Tonverlauf. Beispielhaft zeigt Fig. 6A einen harten Tonwertverlauf mit nur vier verschiedenen Tonwerten von rechts nach links mit sinkendem Tonwert und Fig. 6B einen Tonwertverlauf mit zehn verschiedenen Tonwerten. Es lässt sich leicht erkennen, dass bei einem weicheren Tonwertverlauf die Rasterpunktformen sich weniger signifikant voneinander unterscheiden. Gut unterscheidbare Rasterpunktformen liegen damit räumlich weiter auseinander. Für den Fall, dass eine Detektionszone auf ein Gebiet mit sehr weichen Tonwertverläufen gelegt wird, muss die Grösse des Detektionszone so gewählt werden, dass für eine zuverlässige Copy Detection genügen viele signifikante Tonwerte ausgewertet werden können. In der Praxis läuft die Auswahl von Ort und Grösse einer Detektionszone eine Optimierungsfrage, die bei jedem Bild individuell beantwortet werden muss.

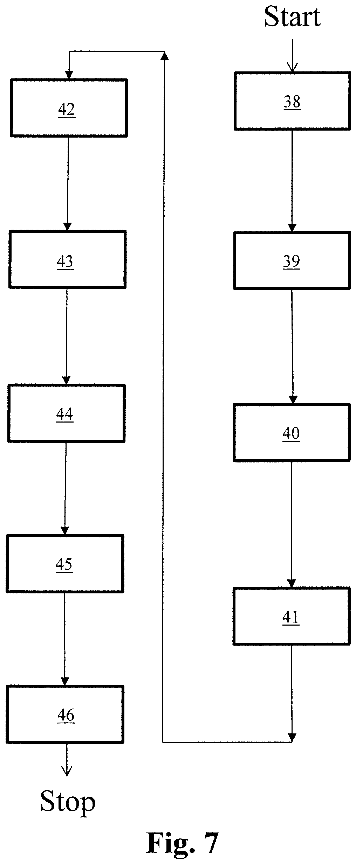

Die Detektion eines so erstellten im Raster verborgenen Mikromusters ist mit geeigneter Software und einem Bildaufnahmegerät wie einem Smartphone oder Tablet-Computer möglich. Sobald eine Zone mit asymmetrischen Rasterpunkten von der Digitalkamera des Smartphones annähernd erfasst wird, führt ein auf der Basis der Mikrostruktur des Rasters definierter Deskriptor die Verifikation in einer Weise aus, dass er in einem ersten Schritt den Anwender mit einem visuellen Hilfsmittel, etwa einem eingeblendeten Rahmen auf dem Display des Smartphones, in eine geeignete Position für das Halten des Smartphones leitet. Nachdem die Kamera bzw. das Smartphone genügend gut positioniert ist, kann der auf Smartphone implementierte Deskriptor den zweiten Verifikationsschritt für die Authentizierung des Drucks vorzunehmen. Den Verfahrensablauf stellt Fig. 7 dar.

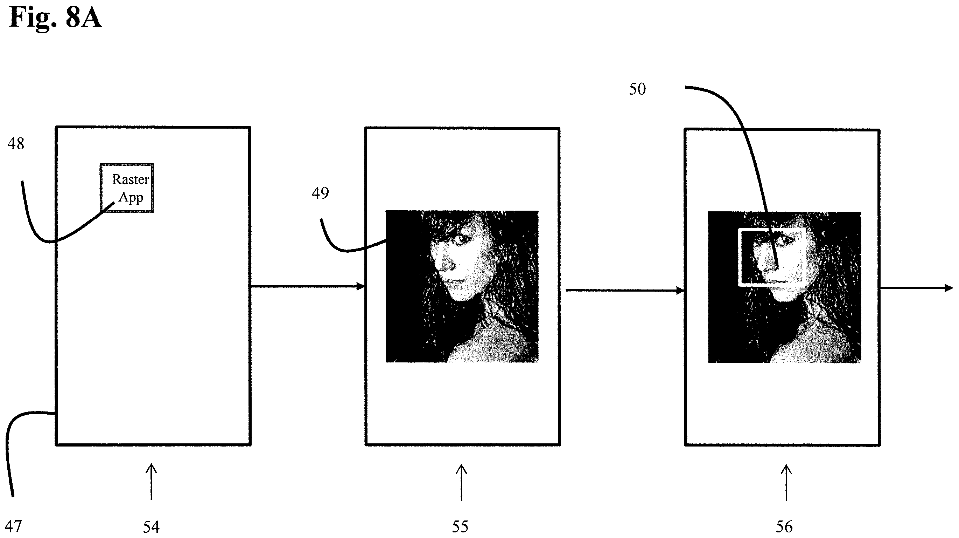

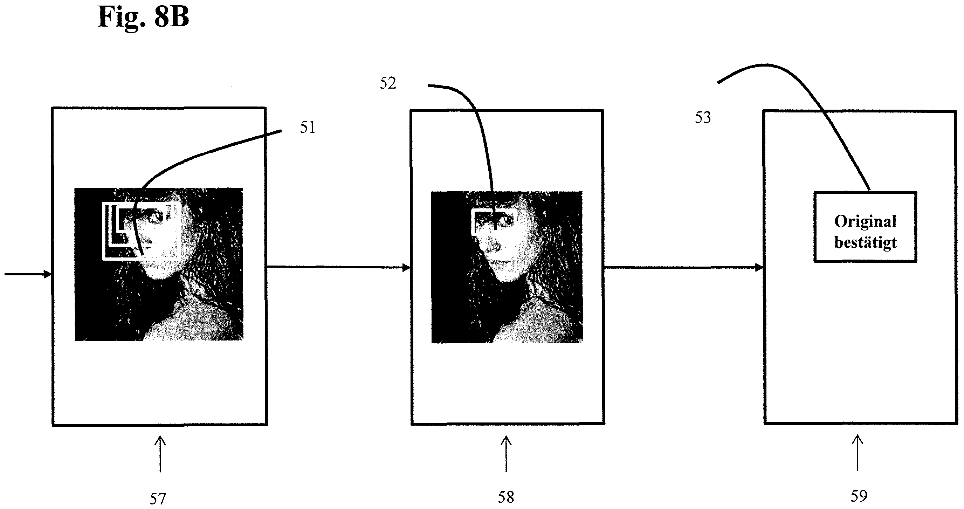

Der Deskriptor beruht im Wesentlichen auf dem in der Detektionszone befindlichen Rasterpunktmuster, sollte aber auf dem Wege eines maschinellen Lernprozesses an das gedruckte Punktrastermuster angepasst werden, um die Zuverlässigkeit der Authentifizierung zu verbessern. Abweichungen von den gedruckten Rasterpunkten, die im Originaldruck aus z. B. balken-, L-, T- oder U-förmigen Objekten bestehen, werden von der Software erkannt und mit einem negativen Authentifizierungsergebnis quittiert, sofern die Abweichung ein bestimmtes geometrisch erlaubtes Mass überschreiten. Eine (illegale) Kopie weist auch auf dem Wege eines hoch aufgelösten Scans und präzisen Drucks auf einem Laserdrucker eine deutliche Abweichung in Richtung einer irregulären runden oder Kartoffelform auf. Sofern die Kopie mit einem Druck erzeugt wird, dem ein eigener Raster-Image-Prozess vorausgeht, werden zwar Rasterpunkte mit regulären Formen erzeugt (Quadrate, Kreise, etc.), aber dennoch abweichend von den Rasterpunktformen des Originals. Der Unterschied zwischen Kopie und Originaldruck lässt sich mit einem gut angepassten Deskriptor zwar mit hoher Zuverlässigkeit ausmachen, ist aber begrenzt durch die Auflösung der Kamera, die Fokussierung und die Bewegung des Smartphones. Mit anderen Worten sind bei Verwendung eines minderwertigen Smartphones und/oder durch Verwackeln der Aufnahme und/oder eine mangelhafte Belichtung falsche Authentifizierungsergebnisse denkbar. Für den Positionierungsschritt, also das Ausrichten des Smartphones, sind Referenzmarkierungen auf dem Originaldruck nicht zwingend nötig, können aber bei der einen oder anderen Anwendung hilfreich sein. In solchen Fällen sind ohnehin auf dem Originaldruck vorhandene grafische Markierungen wie z. B. von einem Logo zu bevorzugen, um dem Kundenwunsch nach einem visuell unveränderten Sujet auf dem Dokument oder der Verpackung zu genügen. Die einzelnen Verfahrensschritte sind in Fig. 8A und im Anschluss Fig. 8B skizziert.

Prinzipiell kann das vorgängig beschriebene Verfahren für den rasterorientierten Originalitätsnachweis über das gesamte Bild erstreckt werden. Der allgemeine Fall ist jedoch die Beschränkung auf eine Detektionszone, je nach Anwendung auch auf mehrere Detektionszonen, wobei der Bereich ausserhalb der Zone ein Standardraster aufweist. Der Übergang der Standrasterung (rund, quadratisch-rund, etc.) in den Bereich der asymmetrischen Rasterung kann von der Mustererkennungssoftware erkannt werden, sodass sich zusätzliche Referenzmarken im Erfassungsbereich der das Bild aufnehmenden Kamera erübrigen.

Obwohl das erfindungsgemässe Verfahren seine Vorteile insbesondere bei der Originalitätsmarkierung von farbigen Bildern entfaltet, ist selbstverständlich der Schutz von monochromen Drucken, z. B. erstellt mit Schwarz oder einer Pantone-Farbe möglich.

Ein weiteres Anwendungsbeispiel ist die Kodierung eines zweifarbigen Bildes bevorzugt aus zwei Druckfarben, die sich durch einen grösseren Unterschied im Rasterwinkel von 60° bis 120° auszeichnen. Das Rastersystem «IS Classic», das sich durch einen Rasterwinkel von 45° für Magenta und 165° für Cyan auszeichnet, ist z. B. für ein doppelt kodiertes Zweifarbensystem gut geeignet. Bei Werten um 90° sollte sich die Geometrie des Rasterberges von beiden Farben unterscheiden. Das ist aber nicht zwangsläufig nötig. Bei der zweifarbigen Variante besteht prinzipiell die Möglichkeit, entweder nur eine der Farben mit asymmetrischer Rasterung oder auch beide Farben zu kodieren.

Der Anwendungsfall der Kodierung von Bildern mit weiteren Farben ist nicht nur möglich, sondern der besondere Vorteil des erfindungsgemässen Verfahrens. Es empfiehlt sich beim rasterorientierten Kodierung nach dieser Erfindung bei einem Vielfarbenbild nur eine Farbe, vorzugsweise die zu oberst liegende Farbe bzw. vom letzten Druckwerk aufgetragene Farbe zu kodieren. Der Grund liegt darin, dass eine zunehmende Komplexität durch eine Vielzahl von zum Teil übereinander liegenden Rasterpunkten die Mustererkennung erschweren bzw. unzuverlässiger machen könnte.

Das Prinzip der asymmetrischen Rasterung lässt sich bei allen bekannten Rastersystemen umsetzten. Die üblichen Rastersysteme wie IS Classic, IS Y fine, IS Y60, IS Y30, ISCMYK+7.5°, die rationalen Rastersysteme RT Classic und RTY45 K fine, 7-Farbdruck und Hexachrome lassen sich alle mit dem erfindungsgemässen Verfahren kodieren, wobei jedoch in der Praxis eine Einschränkung der Komplexität berücksichtigt werden sollte. Beispielsweise würde man im Fall eines 7-Farben-Drucks mit dem Rastersystem HiFi-Color bevorzugt die Farbe Schwarz für die Kodierung auswählen.

Selbstverständlich können monochrome und mehrfarbige Bereiche in einem Bild auftreten. Das ist z. B. dann der Fall, wenn eine bestimmte Farbe, die von CI-Vorschriften eines Unternehmens festgelegt worden sind, etwa Pantone 7742 C, als Hintergrundfarbe einer Verkaufsverpackung auftritt und darin Bilder aus dem CMYK-Farbraum eingebettet sind. Ein solcher Fall erlaubt natürlich die Kodierung sowohl der Hintergrundfarbe als auch einer Farbe des eingebetteten Bildes.

Das erfindungsgemässe Verfahren beruht auf unterschiedlichen Rasterpunktformen in Abhängigkeit vom Halbton der raster-kodierten Farbe. Wenn man bei einer im Wesentlichen monochromen Fläche, also einer Fläche, die im Wesentlichen von einem einzigen Halbton dominiert wird, unterschiedliche Rasterpunktformen realisieren wollte, wäre das durch die Definition von asymmetrischen Rasterbergen unterschiedlicher Geometrie innerhalb der Detektionszone möglich. So kann erreicht werden, dass bei einem bestimmten Halbton, z. B. einem mittelhellen Grau die Rasterpunktformen teilweise in Balkenform und in T-Form auftreten.

Sofern mit mehreren asymmetrischen Rasterbergen unterschiedlicher Geometrie operiert wird, besteht die Möglichkeit diese in benachbarten Zellen nach einem bestimmten Muster, z. B. in jeder Rasterzeile alternierend oder stochastisch verteilt auftreten zu lassen. Natürlich können bei Verwendung mehrerer Detektionszonen Rasterberge spezifisch für jede Zone definiert werden.

Die Darstellung von Halbtönen über die Grösse von Rasterpunkten ist als Amplitudenrasterung bekannt. Die klassische Frequenzrasterung mit Rasterpunkten kleiner Grösse in unterschiedlicher Dichte (unterschiedlicher Frequenz) ist nicht auf das hier beschriebene Verfahren übertragbar. Jedoch kann das erfindungsgemässe Verfahren bei einer Hybridrasterung ausgeführt werden. Eine verbreitete Ausführungsform wendet die Frequenzrasterung bei tiefen und hellen Farbtönen bzw. Grautönen an und im Mitteltonbereich die Amplitudenrasterung, die in diesem Bereich sowohl in Bezug auf naturgetreue Bildwiedergabe als aus für die erfindungsgemässe Kodierung Vorteile aufweist. Es ist auch eine Mischform denkbar, bei der grössere und kleinere Rasterpunkte gemischt auftreten, um einen Farbton zu repräsentieren. Dies empfiehlt sich dann, wenn ein sehr genauer Farbtonverlauf dargestellt werden soll. Das erfindungsgemässe Verfahren ist auf diese Art der Rasterung auch anwendbar.

Die Auswertung erfolgt bevorzugt mit einem Smartphone oder einem mobilen Gerät mit ähnlichen Eigenschaften, z. B. einem Tablet-Computer. Im Wesentlichen ist dies ein Gerät mit einer Bilderfassungseinheit, typischerweise eine Smartphone-Kamera, einem Display und der technischen Möglichkeit eine Software für die Authentizierung ablaufen zu lassen. Statt der Kamera kann zur Bilderfassung auch ein angeschlossenes digitales Mikroskop dienen. Eine Anbindung an das Internet ist nicht zwangsläufig nötig, ist aber von Vorteil, um den gesamten Umfang aller Anwendungsfälle abzudecken und die Software selbst, den Deskriptor oder die Darstellung des Authentizierungsergebnisses zu parametrieren. Die Anbindung an einen Server via Internet lässt sich prinzipiell auf alle bekannten Verfahren bewerkstelligen, etwa LAN, WLAN, LTE, Bluetooth, etc.

Smartphones lassen sich leicht an verschiedene Anwendungsfälle anpassen, indem Anwendungsprogramme als so genannte App auf dem Gerät installiert werden, die ihrerseits wiederum auf lokal abgespeicherte Daten und/oder auf Daten eines Servers bzw. einer externen Datenbank zurückgreifen. So kann der Deskriptor sowohl auf dem Gerät als auch einem externen Server abgespeichert sein. Sofern der Deskriptor auf dem Gerät abgespeichert wird, greift die App für die Erkennung der Rasterpunktformen auch dann auf den Server zurück, wenn der Geräteseits vorhandene Deskriptor aktualisiert werden muss. Die aktualisierte Fassung des Deskriptors ist dann so parametriert, dass die Detektionsfläche in einem spezifischen Bild eins Dokuments oder einer Verpackung auf dem Wege einer Mustererkennung analysiert werden kann.

Der Nutzer des Verfahrens muss die Detektionszone nur ungefähr kennen. Die exakte Positionierung des Smartphones erfolgt nach Aktivierung der App über einen Erfassungsrahmen, der beispielsweise in das Display des Gerätes eingeblendet wird. Die Führungsanweisung an den Nutzer kann auch über eine akustische Ansprache erfolgen, wie es bei der Kommunikation mit künstlichen Intelligenzen bekannt ist. Sobald das sich Smartphone in einer Lage befindet, die sich für eine Authentifizierung eignet, wird dem Nutzer eine visuelle oder akustische Quittierung übermittelt. Die Bildanalyse kann daraufhin verzögerungsfrei erfolgen oder über eine Eingabe des Nutzers gestartet werden. Unmittelbar darauffolgend wird das Authentifizierungsergebnis an den Nutzer übermittelt, beispielsweise mit dem Vermerk «Original» oder «Kopie», oder durch Lichtzeichen mit Rot = Kopie oder Grün = Original. Selbstverständlich sind auch sprachliche Mitteilungen denkbar. Die Form der Übermittlung des Authentizierungsergebnisses kann auch in eingeschränkter Form erfolgen. Beispielsweise kann an einen Konsumenten als Nutzer die Mitteilung herausgegeben, dass die Authentizierung erfolgreich war und das Original erkannt wurde. Hingegen erfolgt das Ergebnis auf der zum Beispiel mit einem Passwort geschützten Expertenebene in weitaus detaillierterer Form, z. B. mit einer Angabe der statistischen Qualität.

Eine weitere Variante besteht in einer Auswertung auf einem Server, der mit dem mobilen Gerät in Verbindung steht. Das Anwendungsprogramm auf dem mobilen Gerät wird in diesem Fall mit dem Server synchronisiert und online parametriert. Dies Version gestattet es, die Auswertung auf dem Server durchzuführen und das Ergebnis nutzerspezifisch an das mobile Gerät zurückzusenden. Der Server kann verschiedene herausgeberspezifische Programmversionen für die Anwendung hosten, wobei ein Herunterladen und Installieren von berechtigten Personen erfolgen kann. Das Anwenderprogramm ist demnach für die Authentifizierung von Dokumenten bzw. einer Dokumentenauswahl eines Herausgebers spezifiziert und an bestimmte Nutzerkreise gerichtet, z. B. Konsumenten, Personal des Herausgebers, etc., wobei der Funktionsumfang des Anwenderprogramms frei an die Art der Nutzung angepasst werden kann.

Für die Zuverlässigkeit der Authentizierung sind Referenzmarkierungen im Erfassungsbereich der Kamera hilfreich, aber nicht zwingend nötig. Linien eines Logos oder signifikante Rasterlinien bedingt durch scharfe Kanten im Motiv sind im Allgemeinen ausreichend. Vorteilhaft sind solche geometrischen Strukturen insbesondere dann, wenn sie mit der gleichen Farbe wie die erfindungsgemäss kodierten Raster gedruckt werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1A: eine Abfolge von acht Rasterzell-Ebenen an der Basis eines Rasterberges mit einer bestimmten Belichtungsebenensequenz, der Draufschau auf jede Ebene des Rasterpunktes und ein korrespondierender Graukeil bzw. Halbtonkeil über die acht Rasterzellebenen;
- Fig. 1B: eine Abfolge von acht Rasterzell-Ebenen an der Basis eines Rasterberges mit einer bestimmten von Fig. 1A unterschiedlichen Belichtungsebenensequenz, der Draufschau auf jede Ebene des Rasterpunktes und ein korrespondierender Graukeil bzw. Halbtonkeil über die acht Rasterzellebenen;
- Fig. 2A: einen Rasterberg bestehend aus 64 Rasterebenen mit nach oben eine Nicht-Belichtung anzeigenden kleiner werdenden Rasterpunkten;
- Fig. 2B: einen Rasterberg wie in Fig. 2A dargestellt, jedoch mit nach oben unsymmetrisch kleiner werdenden Rasterpunkten;
- Fig. 2C: einen Rasterberg wie in Fig. 2A oder Fig. 2B dargestellt, jedoch mit nach oben in verschiedener Weise unsymmetrisch sich verändernder Rasterpunktbelegung;
- Fig. 2D: einen gemäss Fig. 2A, Fig. 2B und Fig. 2C korrespondierender Graukeil bzw. Halbtonkeil 5 zu den Rasterzellebenen;
- Fig. 3A, 3B und 3C: zeigen einerseits den Rasterberg gemäss Fig. 2A in drei geschnittenen Teilen auf der linken Seite und einen Blick auf die Rasterebene mit schwarz eingefärbten Rasterzellen der belichteten Elemente der obersten Rasterebene des zugeordneten Abschnitts;
- Fig. 3D, 3E, 3F und 3G: zeigen einerseits den Rasterberg gemäss Fig. 2B in vier geschnittenen Teilen auf der linken Seite und einen Blick auf die Rasterebene mit schwarz eingefärbten Rasterzellen der belichteten Elemente der obersten Rasterebene des zugeordneten Abschnitts;
- Fig. 3H, 3I, 3J und 3K: zeigen einerseits den Rasterberg gemäss Fig. 2C in vier geschnittenen Teilen auf der linken Seite und einen Blick auf die Rasterebene mit schwarz eingefärbten Rasterzellen der belichteten Elemente der obersten Rasterebene des zugeordneten Abschnitts;
- Fig. 4: zeigt links übereinander drei Rasterkacheln aus jeweils sechszehn Rasterzellen mit gleichen aber in jeder Rasterkachel unterschiedlichen Rasterzellenbelichtung, wobei sich die Rasterkacheln von unten nach oben durch einen rechts ebenfalls übereinander dargestellten zunehmenden Tonwert auszeichnen.
- Fig. 5A, 5B und 5C: zeigen jeweils links einen für die Belichtung vorgegebenen vordefinierten Rasterpunkt, der sich in der Darstellung in der Mitte als gedrucktes Objekt in ein visuell verwandtes Objekt abgewandelt hat, wobei sich nach einem Scan und nachfolgendem Ausdruck des Scans die rechts dargestellten Rasterpunkte mit erheblichen von im Original gedruckten Rasterpunkten feststellbaren Abweichungen ergeben;
- Fig. 6A & 6B: zeigen eine Abfolge von vier bzw. 10 sich deutlich voneinander abgrenzenden, von links nach rechts heller werdenden Halbtönen, die mit einer deutlich sich ändernden Rasterpunktform einhergehen;
- Fig. 7: ein Blockschaltbild einer Prozessdarstellung der Codierung der Rasterpunkte bis zur Verifikation der codierten Rasterpunkte, angefangen von der Bereitstellung eines ersten Bildes über die Beurteilung der optimalen Bildausschnitte für die vorgesehene erfindungsgemässe Codierung bis zur Authentizierung des Originaldrucks nach Anweisung eines dedizierten Anwendungsprogramms; und
- Fig. 8A & 8B: zeigen eine beispielhafte Darstellung einer erfindungsgemäss durchgeführten Authentizierung nach Steueranweisungen durch ein auf einem Smartphone installierten Kontrollprogramm beginnend vom Start desselben über den Tastbildschirm bis zur Darstellung des Authentizierungsergebnisses auf diesem.

### BESCHREIBUNG BEVORZUGTER AUSFÜHRUNGSFORMEN

Die Fig. 1A zeigt eine Abfolge der ersten acht Rasterzell-Ebenen 2a bis 2h an der Basis eines Rasterberges bestehend aus 8x8 Rasterzellen 1. Die unterste Ebene 2a stellt den grösstmöglichen Rasterpunkt mit hier 64 belichteten Rasterelementen dar. Der Rasterpunkt, mit 3a bezeichnet, weist also einen vollständigen 100% Tonwert der Farbe auf und wird nebenstehend dargestellt. Die oberste achte Rasterebene 2h besteht aus 57 belichteten Rasterpunkten, entsprechend einem Tonwert des Rasterpunktes 3h von 89%. Dazwischen befinden sich hier sechs weitere Rasterebenen 2b, 2c, 2d, 2e, 2f und 2g mit 63 bis 58 belichteten und damit schwarz dargestellten Rasterelementen. Dazu gehören dann die Rasterpunkte 3b, 3c, 3d, 3e, 3f und 3g mit einer Nicht-Belichtung aller ecken-nahen Rasterelemente. Neben dieser Abfolge der Rasterzellenebenen ist ein korrespondierender Graukeil bzw. Halbtonkeil 4 zu den Rasterzellebenen dargestellt. Dies entspricht der bekannten amplitudenmodulierten Vorgehensweise, bei dem verschiedene Tonwerte durch verschiedene Ebenen dargestellt werden.

Die Fig. 1B zeigt eine weitere Abfolge der ersten acht Rasterzell-Ebenen an der Basis eines Rasterberges bestehend aus 8x8 Rasterzellen 1, jedoch mit einer Belichtung der Rasterelemente an anderen Orten der Rasterzelle. Damit ist die unterste Rasterzelle 2a wiederum vollständig belichtet und entspricht der Ebene 2a aus Figur 1a. Da die einzelnen Rasterbergebenen jedoch in einer anderen Abfolge belichtet werden, ergibt sich auf der höchsten Ebene 21f eine andere Form für den Rasterpunkt, jedoch der Tonwert mit 89% und damit der Halbton bleiben gleich, was durch den zu Fig. 1A identischen korrespondierenden Graukeil bzw. Halbtonkeil 4 zu den Rasterzellebenen dargestellt ist.

Zwischen diesen im Grauton identischen Ebenen befinden sich hier sechs weitere Rasterebenen 2b, 21a, 21b, 21c, 21d und 21e mit 63 bis 58 belichteten und damit schwarz dargestellten Rasterelementen. Dabei sind die nicht belichteten Rasterelemente jeweils in der unten rechten Ecke 135 unbelichtet geblieben, so dass dann die Rasterelemente 3b, 31a, 31b, 31c, 31d und 31e mit einem im Wesentlichen rechts unten hellen Bereich verbleiben, während alle anderen drei anderen ecken-nahen Rasterelemente-Bereiche belichtet und schwarz dargestellt sind.

Fig. 2A zeigt einen Rasterberg bestehend aus 64 Rasterebenen mit nach oben kleiner werdenden Rasterpunkten, wobei eine zentral symmetrische Belichtung mit einem mittigen Rasterzellenbereich 136 vorgesehen ist, wie sie sich für ein typisches Druckbild nach dem Stand der Technik ergibt. Die Bezugszeichen 6, 7 und 8 betreffen drei Ebenenbereiche des Rasterberges, die dann in grösserem Detail in der Fig. 3A beschrieben werden. Üblicherweise werden die Rasterberge so gestaltet, dass sich quadratisch runde, runde, rautenförmige oder ellipsoide Rasterpunkte ergeben.

Fig. 2B zeigt einen Rasterberg wie in Fig. 2A dargestellt, jedoch mit nach oben unsymmetrisch kleiner werdenden Rasterpunkten. Die belichteten Rasterzellen oder Rasterelemente streben mit steigender Belichtung einer Ecke zu, hier dem Rasterzelleneckbereich 137. Die Bezugszeichen 12, 13, 14 und 15 betreffen vier Ebenenbereiche des Rasterberges, die dann in grösserem Detail in der Fig. 3A beschrieben werden.

Fig. 2C zeigt einen Rasterberg wie in Fig. 2A dargestellt, jedoch mit nach oben in verschiedener Weise unsymmetrisch sich verändernder Rasterpunktbelegung, wobei die belichteten Rasterzellen in mittlerer Höhe einen U-förmigen Rasterpunkt 138 ausbilden und nach oben hin sich der T-Form als Rasterpunkt 139 nähern. Weiter oben, in den letzten Ebenen vor der hier an einer, hier der hinteren, Seitenkante befindlichen Spitze 141 bildet sich ein balkenförmiger Rasterpunkt 140 aus. Die Bezugszeichen 12, 13, 14 und 15 betreffen vier Ebenenbereiche des Rasterberges, die dann in grösserem Detail in der Fig. 3A beschrieben werden.

Die Fig. 2A, 2B und 2C, obwohl unabhängig voneinander dargestellt, eint der auf demselben Zeichnungsblatt daneben in Fig. 2D dargestellte ihnen korrespondierende Graukeil bzw. Halbtonkeil 5 zu den Rasterzellebenen gemäss Fig. 2A, Fig. 2B und Fig. 2C. Mit anderen Worten, der Tonwert ist bei entsprechender Höhe der entsprechenden Ebene des Rasterberges gleich gross, also erscheint der Rasterpunkt dem Betrachter gleich, wie noch später im Zusammenhang mit Fig. 4 ausgeführt werden wird.

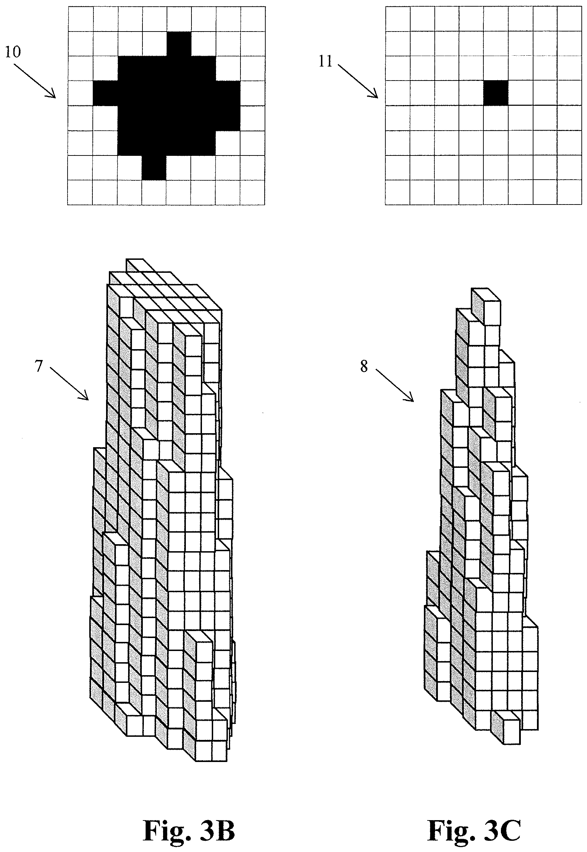

Die Fig. 3A, 3B und 3C zeigen einerseits den Rasterberg 1 gemäss Fig. 2A in drei geschnittenen Teilen 6, 7 bzw. 8 auf der linken Seite und einen Blick auf die Rasterebene 9, 10 bzw. 11 mit schwarz eingefärbten Rasterelementen der belichteten Elemente der obersten Rasterebene des zugeordneten Abschnitts 6, 7 oder 8 auf der rechten Seite. Der untere Teil 6 deckt ein Tonwert von 100% bis ca. 66%, der mittlere Teil 7 von 66% bis 32% und die Spitze von 32% bis 2% ab. Die jeweils obersten Rasterebenen 9, 10, 11 weisen im Vergleich zueinander eine mehr oder weniger symmetrische Form auf. Die untere Ebene 6 stellt eine Rasterzelle 100 mit 8x8 Rasterelementen 102 dar. In dieser Rasterzelle 100 sind nun einige Rasterelemente "gedruckt" oder belichtet und bilden damit den Rasterpunkt 101, der hier schwarz dargestellt ist. Dabei kann schwarz für eine beliebige Farbe im vorgegebenen Druckfarbraum stehen, inklusive schwarz auf weissem/hellen Untergrund oder umgekehrt.

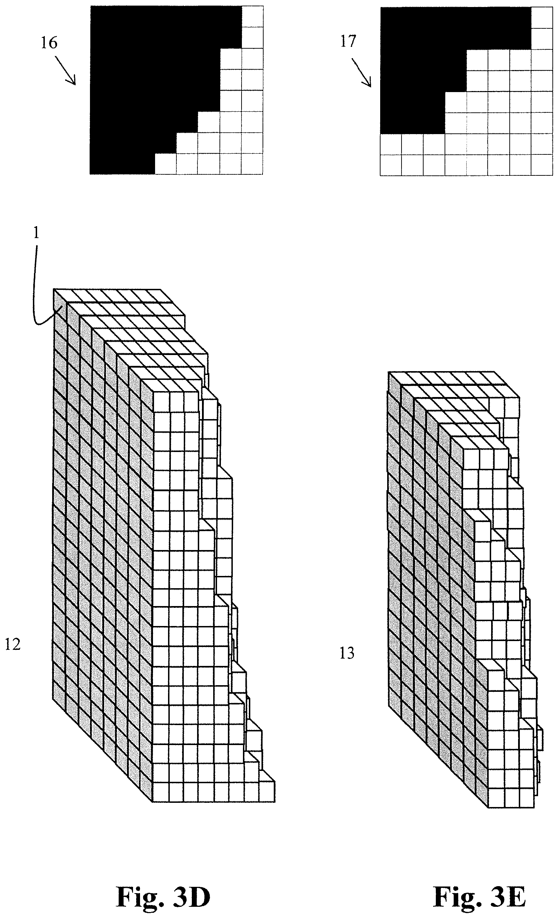

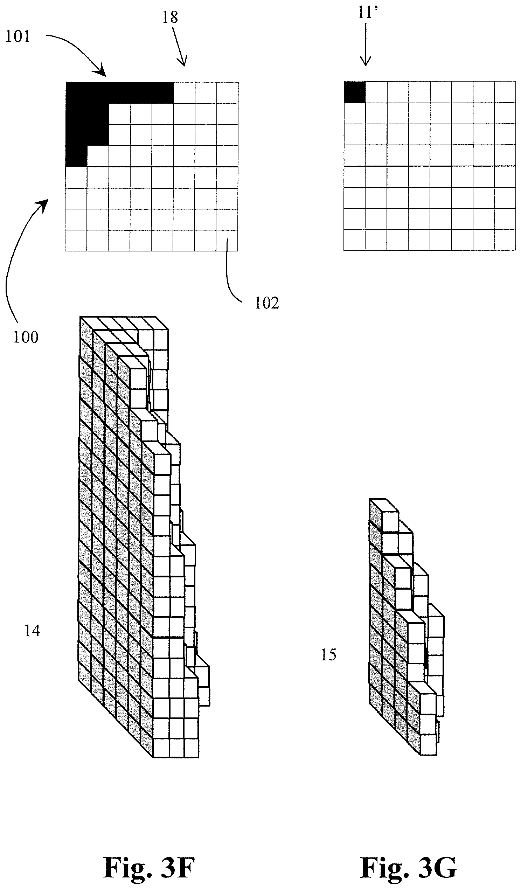

Die Fig. 3D, 3E, 3F und 3G zeigen einerseits den Rasterberg 1 gemäss Fig. 2B in vier geschnittenen Teilen 12, 13, 14 bzw., 15 auf der linken Seite und einen Blick auf die Rasterebene des zugeordneten Abschnitts 16, 17, 18 bzw. 19 auf der rechten Seite. Der unterste Teil 12 deckt einen Tonwert von 100% bis ca. 69%, der untere mittlere Teil 13 einen Tonwert von 70% bis 44%, der obere mittlere Teil 14 einen Tonwert von 43% bis 16% und die Spitze 15 eine Abdeckung von 15% und weniger ab. Die jeweils obersten Rasterebenen 16, 17, 18 bzw. 11' weisen die Form einer Ecke auf, die man auch als sich verkleinerndes Dreieck ansehen kann. Für die mittlere obere Ebene 14 ist nun klar zu erkennen, dass bei der Rasterzelle 100 mit seinen 8x8 Rasterelementen 102 nun einige gegenüber der Mitte asymmetrisch gedruckte Rasterelemente vorliegen und damit den asymmetrisch gedruckten Rasterpunkt 101 bilden.

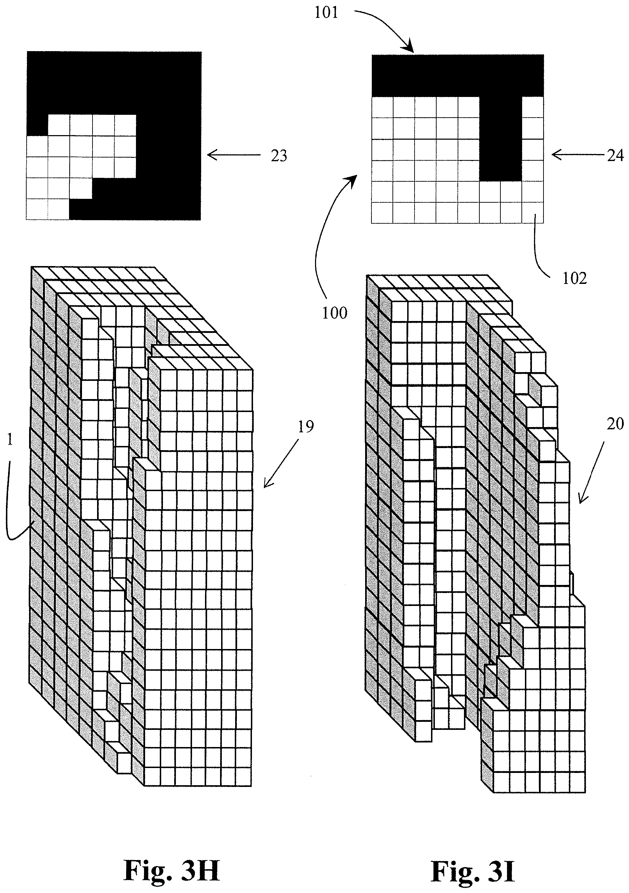

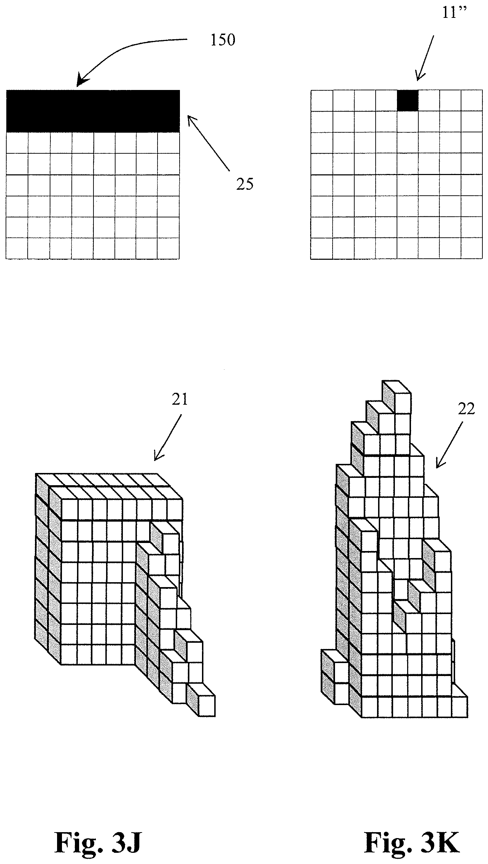

Die Fig. 3H, 3I, 3J und 3K zeigen einerseits den Rasterberg gemäss Fig. 2C in vier geschnittenen Teilen 19, 20, 21 und 22 auf der linken Seite und einen Blick auf die Rasterebene des zugeordneten Abschnitts 23, 24, 25 bzw. 11" auf der rechten Seite. Der unterste Teil 19 deckt einen Tonwert von 100% bis ca. 70%, der untere mittlere Teil 20 einen Tonwert von 69% bis 37%, der obere mittlere Teil 21 einen Tonwert von 36% bis 25% und die Spitze 22 einen Tonwert von 24% und weniger ab. Die jeweils obersten Rasterebenen 23, 24, 25, 11" weisen Formen auf, die sich von einem links offenen Kreis, also einer U-Form 23, über eine T-Form 24 der Rasterelemente 102 der Ebene bis zu einem Balken 25 bzw. ein einzelnes belichtetes Rasterelement 102 als dezentraler Rasterpunkt 11" entwickeln. Der Balken 25 befindet sich dabei an einer Seitenkante 150 der Rasterzelle 100 Wesentlich ist mindestens bei einer vorbestimmten Anzahl von Tonwerten eine vorbestimmte von üblichen punktsymmetrischen oder achsensymmetrischen Formen abweichende Form des gedruckten Rasterpunktes.

Die Fig. 4 zeigt übereinander drei Rasterkacheln 26a, 26b und 26c aus jeweils sechszehn Rasterzellen in einer räumlichen Darstellung, die sich von der Rasterkachel 26a zu der Rasterkachel 26c durch einen zunehmenden Tonwert auszeichnen. Dabei unterscheiden sich die Rasterpunkte deutlich in ihrer Form. So sind die einzelnen Rasterpunkte der Rasterkachel 26a ein durchgehender Strich an der linken Kante des jeweiligen Rasterpunktes, aus dem ein nach unten gerichteter Haken als belichtete Fläche herausragt. Die einzelnen Rasterpunkte der Rasterkachel 26b bestehen aus einem durchgehenden Strich an der linken Kante des jeweiligen Rasterpunktes, aus dem im oberen Drittel des Rasterpunktes ein vor der gegenüberliegenden Kante endender Strich belichtet ist. Die einzelnen Rasterpunkte der Rasterkachel 26b bestehen aus einem durchgehenden Strich an der linken Kante des jeweiligen Rasterpunktes, aus dem im oberen Drittel des Rasterpunktes ein vor der gegenüberliegenden Kante endender Strich belichtet ist. Die einzelnen Rasterpunkte der Rasterkachel 26c bestehen dann nur aus einem durchgehenden Strich an der linken Kante des jeweiligen Rasterpunktes. Die daneben auf der rechten Seite der Fig. 4 ebenfalls übereinander stehenden Grauflächen 27a, 27b und 27c symbolisieren die wahrgenommenen Halbtöne bzw. Grautöne entsprechend von dunkel nach hell, von unten nach oben gesehen.

Die Fig. 5A zeigt links einen als Strich ausgeführten und für die Belichtung vorgegebenen vordefinierten Rasterpunkt 28a. Dabei bedeutet vordefiniert die Definition als elektronische Daten für die z.B. pixelweise Laserbelichtung. Diese Definition ist dann hier die Definition einer Farbe im Mehrfarbendruck, bevorzugt die oberste Farbe. Daraus ergibt sich nach dem Druck, der durch den Pfeil 160 symbolisiert ist, ein visuell verwandtes Objekt, welches aufgrund der Besonderheiten des Drucks wie Farbe, Substrat und Maschinenparameter, um einige zu nennen, eine etwas abweichende Form 29a aufweisen wird. Eine von diesem Ausdruck erstellte Kopie, d.h. ein Scan mit nachfolgendem Ausdruck des Scans weist von den im Original gedruckten Rasterpunkten Abweichungen auf, die anhand einer maschinellen Mustererkennung festgestellt werden können. Die Ursache für die Rasterpunktformen der Kopie 30a liegen z.B. in Ungenauigkeiten des Scans, einer erneuten Farbseparation und einem wiederholten Raster-Image-Prozess beim Druck des dann kopierten Ausdrucks, wobei alle diese unter Kopierfehler subsummierbaren Faktoren durch den Pfeil 170 dargestellt sind.

Die Fig. 5B zeigt einen (liegend) L-förmigen Rasterpunkt 28b und die Fig. 5C zeigt einen hakenförmigen Rasterpunkt 28c. Die zu Fig. 5A erläuterten Abweichungen beim Druck treten hier als liegendes gedrucktes L 29b bzw. als gedruckter Hakten 29c auf, wobei dann bei einem Scan und einer anschliessenden Druckkopie 30b bzw. 30c sich noch weitergehende Unterschiede ergeben, die mit einer Mustererkennung festgestellt werden können.

Die Fig. 6A zeigt eine Abfolge von vier sich deutlich voneinander abgrenzenden Halbtönen. Der von links nach rechts heller werdende Ton ist einhergehend mit einer deutlich sich ändernden Rasterpunktform 23, 24, 25 bzw. 11'.

Die Fig. 6b zeigt eine Abfolge von zehn sich voneinander abgrenzenden Halbtönen. Der von links nach rechts in zwei Reihen dargestellt heller werdende Ton ist einhergehend mit einer sich ändernden Rasterpunktform 31, 23, 32, 33, 34, 35, 24, 36, 25 und 37.

Dabei handelt es sich um vorbestimmte Rasterpunktformen, die einem bekannten symmetrischen Tonwert entsprechen, wobei in der Detektionszone diese Rasterpunktformen die üblichen Formen ersetzen. Dabei können auch unterschiedliche asymmetrische Rasterpunktformen mit gleichem Tonwert in verschiedenen Bereichen einer Detektionszone vorgesehen sein oder diese werden als unterschiedliche also zwei oder mehr Detektionszonen definiert. Dabei werden diese Rasterberggeometrien vorbestimmt und die zugeordnete Ebene (Höhe) in ihrem entsprechenden Tonwert definiert.

Die Fig. 7 zeigt ein Blockschaltbild einer Prozessdarstellung der Codierung der Rasterpunkte bis zur Verifikation der codierten Rasterpunkte, angefangen von der Bereitstellung eines ersten Bildes zur Beurteilung der optimalen Bildausschnitte für die vorgesehene erfindungsgemässe Codierung 38 bis zu Authentizierung des Originaldrucks nach Anweisung eines dedizierten Anwendungsprogramms 46.

Es wird davon ausgegangen, dass für den Druckbereich in einer Detektionszone eines Bildes auf einer Verpackung der RIP-Prozess erfindungsgemäss abgewandelt worden ist. Dabei sind die Rasterberge dezidiert und deterministisch vorgegeben asymmetrisch ausgestaltet worden, so dass diese entsprechend den zu druckenden Halbtönen im Druckprozess umgesetzt worden sind. Dabei sind die zu einer Codierung führenden Abwandlungen so vorgenommen worden, dass die Druckbelegung der entsprechenden Farbe der Druckbelegung dem übrigen normalen Druckbild entspricht. Es liegt also ein Druckerzeugnis vor, beispielsweise eine Verpackung, auf dem mindestens ein Teil des Bildes, nämlich der Teil, der in einer Detektionszone liegt, erfindungsgemäss gegenüber dem RIP Prozess abgeändert ist. Es können mehrere Detektionszonen mit unterschiedlichen Druckbelegungen vorgesehen sein.

Dieses dem Nutzer vorliegende Druckbild, dass durch den Druck entsprechend Pfeil 160 in Fig. 5 entstanden ist, kann nun ein Original oder eine Kopie sein, wobei eine Kopie in der Regel dadurch gekennzeichnet ist, dass jemand ein Original abfotografiert oder gescannt hat, also entsprechend Pfeil 170 in Fig. 5, um einen Datensatz zu erzeugen, der für den Druck einer Kopie des Druckbildes vorgesehen ist.

Der Verfahrensablauf, der in der Fig. 7 dargestellt ist, gliedert sich in eine Designphase, die alle Verfahrensschritte bis einschliesslich des Drucks und der Definition des Deskriptors umfasst, sowie die eigentliche Authentifizierungsphase, die alle Handlungen des Nutzers umfasst, um die Authentifizierung des Originaldrucks zu bewerkstelligen. Während dieser Phase wird eine elektronische Druckvorlage mit den erfindungsgemäss modulierten Rasterpunkten erzeugt. Dann liegt nach dem Druck ein vorgegebenes Bild 38 vor, z.B. aus dem Sujet einer Verpackung, das im Hinblick auf einen erfindungsgemässen Schutz zu beurteilen ist. Diesem Sujet kann man eine oder mehrere Detektionszonen zuweisen 39, also einen oder mehrere Bereiche, in denen der CtP-Prozess erfindungsgemäss abgewandelt worden ist. Natürlich kann die Detektionszone auch das gesamte Sujet umfassen.

Im nächsten Schritt 40 wird die Rasterberggeometrie bestimmt durch das Setzen von geeigneten Schwellwertparametern im Raster-Image-Prozess. Das heisst, es wird für eine Vielzahl von Rasterpunkten die beim Original anzuwendende und somit zu druckende Punktform festgestellt. Diese ist nicht, wie beim amplitudenmodulierten Rasterprozess üblich eine symmetrische Abbildung des Rasterpunktes wie bei Fig. 1A und in der Darstellung für drei Farb-Halbtöne in den Fig. 3A, 3B und 3C sondern deterministisch vorgegeben eine deutlich asymmetrische Abbildung, so dass bei einem dunkleren Farbton Rasterpunkte 16 und bei einem helleren Farbton Rasterpunkte 17 oder 18 erkannt werden.

Die zu erkennenden Rasterpunkte 16, 17 oder 18, sind nun keine optimalen Punkte wie in Fig. 3D, 3E oder 3F dargestellt, sondern sind qualitativ schlechter, wie in Fig. 5A bis Fig. 5C für die Druckbilder 29a, 29b und 29c angedeutet, aber nicht so schlecht, wie die Druckbilder 30a, 30b oder 30C anzeigen.

Dafür wird in dem Verfahren in einem Schritt 41 ein Deskriptor für die Wiedererkennung von diesen charakteristischen Rasterpunktformen berechnet und für die Authentifizierung zur Verfügung gestellt. Der Deskriptor ist ein Mustererkennungsalgorithmus, der an das Muster bestehend aus den Rasterpunktformen angepasst ist. Deskriptoren können vorgegeben sein oder werden und werden im Hinblick auf verwendete Drucktechniken, Druckpapiere etc. angepasst, wobei man von trainieren spricht, wobei EP 2 921 989 A1 eine mögliche Vorgehensweise aufzeigt.

Der Deskriptor kann in einem weiteren Schritt trainiert und besser an das Muster angepasst werden 42, was kein zwingend erforderlicher Schritt ist, aber vorteilhaft, um die Zuverlässigkeit der Authentifizierung zu erhöhen. Das Training kann entweder auf der Basis von Originaldrucken, z. B. von Druckfahnen, oder durch drucktypische Bildveränderungen bedingt durch Farb- und Papiereigenschaften, Druckverfahren und maschinentypische Einflüsse erfolgen. Im Anschluss an Schritt 41 bzw. 42 wird in einem Hinterlegungsschritt 43 der Deskriptor auf einer Datenbank hinterlegt und in einem Bereitstellungsschritt 44 über einen Server dem Steuerprogramm des Verfahrens zur Verfügung gestellt.

Die folgenden Schritte dienen der Vorbereitung des mobilen Gerätes für die Authentifizierung und die Authentifizierung an sich. Der Benutzer hat für diesen Zweck ein Applikationsprogramm 45 für die erfindungsgemässe Raster-Authentizierung auf einem mobilen Gerät installiert und diese nach Synchronisation mit dem Server mit dem ausgewählten Deskriptor-Script parametriert und führt in einem Authentizierungschritt 46 nach Anweisung der Applikation den notwendigen Vergleich aus, um zu entscheiden, ob es sich bei der abfotografierten Detektionszone um ein Original oder eine Kopie handelt.

Die Fig. 8A, gefolgt von Fig, 8B, zeigt eine beispielhafte Darstellung einer erfindungsgemäss durchgeführten Authentifizierung nach Steueranweisungen durch ein auf einem Smartphone installierten Kontrollprogramm beginnend vom Start desselben 48 über den Tastbildschirm 47 bis zur Darstellung des Authentizierungsergebnisses auf diesem Tastbildschirm 47 als Ausgabeeinheit. Der Start geschieht durch die Berührung des entsprechenden Symbols 48 auf dem Display 47 des mobilen Gerätes im Schritt 54, was neben einem Smartphone auch ein Tabletcomputer sein kann, bis zur Darstellung des Authentizierungsergebnisses 53 im letzten Schritt 59. Dazwischen wird eine mit der Kamera des tragbaren portablen Kommunikationsgerätes aufgenommene Darstellung der Bilddaten 49 auf dem Bildschirm in einem Vorauswahlschritt 55 geschaltet. Diesem kann die Vorgabe eines groben Visualisierungsrahmens 50 in einem Auswahlschritt folgen, wobei eine Führungssymbolik 51 den Ausschnitt in eine Detektionszone 52 verschiebt, oder besser den Benutzer dazu anhält, diesen Ausschnitt in einem Verschiebeschritt 57 vergrössert aufzunehmen. Die üblichen Hilfsmittel wie Autofokus oder Zoom sind dabei möglich. Es kann auch vorgesehen sein, dass das Kontrollprogramm mehrere Detektionszonen 52 anfahren lässt, also die Schritte 56 bis 58 mehrfach wiederholt mit unterschiedlichen Detektionszonen 52. Wesentlich ist die Aufnahme der Detektionszone 52 von einem Bildausschnitt, der dann eine dem CCD- oder Bild-Sensor entsprechende Matrix von Bildpunkten aufweist, die in einem Vergleichsschritt 59 entweder nahe zu den original gedruckten Bilder 29a, 29b oder 29c der vordefinierten Rasterpunkte angesehen werden oder eher dem Druck einer Kopie von diesen nach den Bildern 30a, 30b oder 30c, womit dann das Authentifizierungsergebnis dargestellt wird.

### BEZUGSZEICHENLISTE

- 1: Rasterelement
- 2a: vollständig belichtete Rasterzelle (alle Rasterelemente sind druckende Elemente)
- 2b: Wie 2a, jedoch ein Rasterelement unbelichtet
- 2c: Wie 2a, jedoch zwei einander gegenüber liegende Rasterelemente unbelichtet
- 2d: Wie 2a, jedoch mit drei unbelichteten Rasterelementen an den Ecken
- 2e: Wie 2a, jedoch mit vier unbelichteten Rasterelementen an den Ecken
- 2f: Wie 2e, jedoch mit zwei unbelichteten Rasterelementen einer der Ecken, also mit insgesamt fünf unbelichteten Rasterelementen
- 2g: Wie 2e, jedoch mit je zwei unbelichteten Rasterelementen an den gegenüberliegenden Ecken, also mit insgesamt sechs unbelichteten Rasterelementen
- 2h: Wie 2e, jedoch mit je zwei unbelichteten Rasterelementen an drei Ecken, also mit insgesamt sieben unbelichteten Rasterelementen
- 3a bis 3h: Idealisierte Form der Rasterpunkte korrespondierend zu den Ebenen 2a bis 2h
- 21a: Wie 2b, jedoch an einer Ecke zwei unbelichtete Rasterelemente, Tonwert wie 2c
- 21b: Wie 21a, jedoch an einer Ecke drei unbelichtete Rasterelemente, Tonwert wie 2d
- 21c: Wie 2b, jedoch an einer Ecke vier unbelichtete Rasterelemente, Tonwert wie 2e
- 21d: Wie 2b, jedoch an einer Ecke fünf unbelichtete Rasterelemente, Tonwert wie 2f
- 21e: Wie 2b, jedoch an einer Ecke sechs unbelichtete Rasterelemente, Tonwert wie 2g
- 21f: Wie 2b, jedoch an einer Ecke sieben unbelichtete Rasterelemente, Tonwert wie 2h
- 31a bis 31f: Idealisierte Form der Rasterpunkte korrespondierend zu den Ebenen 21 a bis 21f
- 4: Graukeil entsprechend der nebenstehenden Reihen der Rasterpunktformen 3a bis 3h bzw. 3a, 3b, 31a bis 31f.
- 5: Graukeil entsprechend der nebenstehenden Darstellung von Schwellwerten für eine sukzessive Abnahme der Belichtung von Rasterelementen (Rasterberg). Der Graukeil überspannt das gesamte Spektrum von Grautönen von 100% Tonwert (Schwarz) bis 0% (Weiss).
- 6: Symmetrischer Rasterberg mit einem Tonwert von 100% bis 66%.
- 7: Symmetrischer Rasterberg mit einem Tonwert von 68% bis 32%.
- 8: Symmetrischer Rasterberg mit einem Tonwert von 31% bis 1.6%.
- 9: Die Rasterpunktform der obersten Rasterbergebene des Rasterbergs 6 zeichnet sich durch zweiundzwanzig unbelichtete Rasterelemente aus, wobei die äussere Form mehr oder weniger symmetrisch ist.
- 10: Die Rasterpunktform der obersten Rasterbergebene des Rasterbergs 7 zeichnet sich durch dreiundvierzig unbelichtete Rasterelemente aus, wobei die äussere Form mehr oder weniger symmetrisch ist.
- 11: Die Rasterpunktform der obersten Rasterbergebene des Rasterbergs 8 zeichnet sich durch dreiundsechzig unbelichtete Rasterelemente aus bzw. besteht aus einem einzigen belichteten Rasterelement.
- 11': belichtetes Eckelement
- 11": belichtetes einzelnes Seitenkantenelement
- 12: Rasterberg mit einem Tonwert von 100% bis 69%. Die Gestalt des Rasterberges ist unsymmetrisch.
- 13: Rasterberg mit einem Tonwert von 70% bis 44%. Die Gestalt des Rasterberges ist unsymmetrisch.
- 14: Rasterberg mit einem Tonwert von 43% bis 16%. Die Gestalt des Rasterberges ist unsymmetrisch.
- 15: Rasterberg mit einem Tonwert von 15% bis 1,6%. Die Gestalt des Rasterberges ist unsymmetrisch.
- 16: Die Rasterpunktform der obersten Rasterbergebene des Rasterbergs 12 zeichnet sich durch 20 unbelichtete Rasterelemente aus, wobei die äussere Form asymmetrisch ist und im Wesentlichen eine Ecke unbelichtet ist.
- 17: Die Rasterpunktform der obersten Rasterbergebene des Rasterbergs 13 zeichnet sich durch 36 unbelichtete Rasterelemente aus, wobei die äussere Form asymmetrisch ist und im Wesentlichen eine Ecke unbelichtet ist.
- 18: Die Rasterpunktform der obersten Rasterbergebene des Rasterbergs 12 zeichnet sich durch zehn belichtete Rasterelemente aus, wobei die äussere Form asymmetrisch ist und im Wesentlichen eine Ecke belichtet ist.
- 19: Rasterberg mit einem Tonwert von 100% bis 70%. Die Gestalt des Rasterberges ist streng unsymmetrisch.
- 20: Rasterberg mit einem Tonwert von 69% bis 37%. Die Gestalt des Rasterberges ist streng unsymmetrisch.
- 21: Rasterberg mit einem Tonwert von 36% bis 25%. Die Gestalt des Rasterberges ist streng unsymmetrisch.
- 22: Rasterbergspitze mit einem Tonwert von 24% bis 1.6%. Die Gestalt des Rasterberges ist streng unsymmetrisch.
- 23: Die Rasterpunktform der obersten Rasterbergebene des Rasterbergs 19 zeichnet sich durch neunzehn unbelichtete Rasterelemente aus, wobei die äussere Form streng asymmetrisch ist und im Wesentlichen in der Mitte und an einer Ecke unbelichtet ist.
- 24: Die Rasterpunktform der obersten Rasterbergebene des Rasterbergs 20 zeichnet sich durch vierundzwanzig belichtete Rasterelemente aus, wobei die äussere Form sich einem «T» nähert.
- 25: Die Rasterpunktform der obersten Rasterbergebene des Rasterbergs 21 zeichnet sich durch sechzehn belichtete Rasterelemente aus, wobei die äussere Form einem Balken an einer Seite der Rasterzelle entspricht.
- 26a: Rasterkachel bestehend aus sechzehn Rasterzellen, wobei die belichteten Rasterelemente die Form eines Balkens auf der linken Seite der Rasterzellen annehmen.
- 26b: Rasterkachel bestehend aus sechzehn Rasterzellen, wobei die belichteten Rasterelemente die Form von zwei in einem 90°-Winkel zueinander ausgerichteten Balken annehmen. Der Tonwert ist höher als in der darüber dargestellten Rasterkachel.
- 26c: Rasterkachel bestehend aus sechszehn Rasterzellen, wobei die belichteten Rasterelemente eine komplexe Form annehmen. Der Tonwert ist nochmals höher als bei den vorgenannten Rasterkacheln.
- 27a bis 27c: Visuell wahrgenommene Grauwerte korrespondierend zu den unter 26a bis 26c beschriebenen Rasterkacheln.
- 28a: Balkenförmiger Rasterpunkt gemäss Ausgabedatei für die Belichtung
- 28b: Winkelförmiger Rasterpunkt gemäss Ausgabedatei für die Belichtung
- 28c: Rasterpunkt mit Doppelwinkelform gemäss Ausgabedatei für die Belichtung
- 29a bis 29c: Verzerrungen der Rasterpunktformen im Originaldruck (beispielhaft) ausgehend von den vorgegebenen Rasterpunktformen gemäss Rasterpunkten 28a bis 28c
- 30a bis 30c: Verzerrungen der Rasterpunktformen in der Kopie (beispielhaft) ausgehend von den Rasterpunktformen des Originals gemäss Rasterpunkten 29a bis 29c
- 31 bis 37: Asymmetrisch geformte Rasterpunkte mit abnehmendem Tonwert und sich stetig verändernden, simpler werdenden Formen.
- 38: Vorgegebenes Bild, z. B. aus dem Sujet einer Verpackung, im Hinblick auf einen erfindungsgemässen Schutz beurteilen
- 39: Auswahl von mindestens einer Detektionszone
- 40: Rasterberggeometrie bestimmen durch das Setzen von geeigneten Schwellwertparametern im Raster-Image-Prozess
- 41: Deskriptor für die Wiedererkennung von charakteristischen Rasterpunktformen berechnen
- 42: Deskriptor trainieren (kein zwingend erforderlicher Schritt). Das Training kann entweder auf der Basis von Originaldrucken, z. B. von Druckfahnen, oder durch drucktypische Bildveränderungen bedingt durch Farb- und Papiereigenschaften, Druckverfahren und maschinentypische Einflüsse erfolgen
- 43: Deskriptor auf einer Datenbank hinterlegen
- 44: Deskriptor über einen Server zur Verfügung stellen
- 45: Eine App für die erfindungsgemässe Raster-Authentizierung auf einem mobilen Gerät zur Verfügung installieren und diese nach Synchronisation mit dem Server mit dem ausgewählten Deskriptor-Script parametrieren
- 46: Authentizierung nach Anweisung der App ausführen
- 47: Display eines mobilen Gerätes, z. B. eines Smartphones
- 48: Symbol einer App für das erfindungsgemässe Authentifizierungsverfahren
- 49: Zu prüfendes Bild im Hinblick auf Originalität
- 50: Grober Orientierungsrahmen
- 51: Visuelle Führungssymbolik
- 52: Detektionszone; das mobile Gerät befindet sich jetzt in einer geeigneten Position, um eine Bildaufnahme von der Detektionszone zu machen.
- 53: Authentizierungsergebnis
- 54: App Starten
- 55: Bild auswählen
- 56: Ungefähre Position der Detektionszone auswählen
- 57: Software (App) leitet den Nutzer zur optimalen Position
- 58: Authentizierung durchführen
- 59: Authentizierungsergebnis wird dargestellt
- 135: unbelichtete Ecke
- 136: belichtete zentrale Spitze
- 137: belichtete Eckenspitze
- 138: U-förmiger Rasterpunkt
- 139: T-förmiger Rasterpunkt
- 140: balkenförmiger Rasterpunkt
- 141: belichtete Spitze an einer Seitenkante
- 150: Seitenkante einer Rasterzelle

## Patentansprüche

1. Verfahren zum Drucken von Authentifizierungskennzeichen durch Aufbringen eines mindestens amplitudenmodulierten Rasterdrucks in einer Detektionszone (52) auf einen Gegenstand, wobei die bedruckte Fläche der Detektionszone (52) aneinander grenzende Rasterzellen (100) umfasst, in welchen Rasterzellen (100) jeweils ein Rasterpunkt (101) aus einer Matrix aus druckbaren Rasterelementen (102) gedruckt wird, wobei einzelne Tonwerte (27a, 27b, 27c) des Rasterdrucks jeweils einer Rasterebene eines Rasterberges (1) für einen Rasterpunkt (101) entsprechen, wobei in der Detektionszone (52) in vorbestimmter Weise für eine Vielzahl von Tonwerten (27a, 27b, 27c) von zu druckenden Rasterpunkten (101) die zugeordnete Rasterebene des Rasterberges (1) modifiziert wird, dass ihr bei gleichbleibendem Tonwert (27a, 27b, 27c) des Drucks ein vorbestimmtes Matrixbild (16, 17, 23, 24, 25, 26a, 26b, 26c) der zu druckenden Rasterelemente (102) zugewiesen wird.

2. Verfahren nach Anspruch 1, **dadurch gekennzeichnet, dass** die Rasterebenen für eine Vielzahl von Tonwerten (27a, 27b, 27c) gegenüber der Punktsymmetrie der Tonwerte von 0% und 100% abweicht.

3. Verfahren nach Anspruch 1 oder 2, **dadurch gekennzeichnet, dass** die Verteilung der Rasterelemente (102) für einen vorbestimmten Tonwert (27a, 27b, 27c) in der Matrix einer Rasterzelle (100) aus den Matrixbildern einer Verteilungs-Gruppe ausgewählt wird, die eine Ecke (16, 17, 18, 11') einer Rasterzelle, eine Randlinie (25, 26a ,28a) einer Rasterzelle, ein C (23), ein L (28b), ein T (24, 26b) oder eine nicht punktsymmetrische und nicht achsensymmetrische Druckform (26b, 26c, 28c) umfasst.

4. Verfahren nach Anspruch 3, **dadurch gekennzeichnet, dass** die Verteilung der Rasterelemente (102) in einem Rasterberg (1) sich von dem Tonwert 100% zum Tonwert 0% von dem punktsymmetrischen Volldruck über ein erstes Matrixbild aus der besagten Verteilungs-Gruppe hin zu mindestens einem zweiten anderen Matrixbild aus der besagten Verteilungs-Gruppe verändert.

5. Verfahren nach einem der Ansprüche 1 bis 4, **dadurch gekennzeichnet, dass** zwei oder mehr Detektionszonen (52) vorgesehen sind, wobei die Rasterberge für die gleiche Farbe in jeweils zwei Detektionszonen (52) gleich oder unterschiedlich zueinander sind.

6. Verfahren nach einem der Ansprüche 1 bis 5, **dadurch gekennzeichnet, dass** die Rasterberge für unterschiedliche Farben gleich oder unterschiedlich zueinander sind.

7. Verfahren nach einem der Ansprüche 1 bis 5, **dadurch gekennzeichnet, dass** die modifizierten Matrixbilder für Halbtöne im Bereich von 40 bis 90% ausgelegt werden.

8. Verfahren nach Anspruch 7, **dadurch gekennzeichnet, dass** die modifizierten Matrixbilder für Halbtöne im Bereich von 50 bis 80% ausgelegt werden.

9. Authentifizierungsverfahren für einen nach einem der Ansprüche 1 bis 8 bedruckten Gegenstand, umfassend das Bereitstellen eines portablen Bildaufnahmegerätes mit einem Mikroprozessor zur Ausführung eines Authentifizierungsprogrammes, das Bereitstellen der sich aus Rasterbergdaten vorherbestimmten sich ergebenden Druckbildern für eine vorbestimmte Anzahl von Rasterpunkten des bedruckten Gegenstandes aus einer Detektionszone für eine Vielzahl von Tonwerten und das Bereitstellen eines Computerprogrammes zum Vergleichen von aufgenommenen Rasterpunkten mit den sich aus den Rasterbergdaten vorherbestimmten Druckbildern für die Vielzahl der vorbestimmten Tonwerte; wobei das Verfahren die weiteren Schritte umfasst: des Aufnehmens eines Bildes einer Detektionszone des bedruckten Gegenstandes, des Auswählens einer vorbestimmten Anzahl von Rasterpunkten in der besagten Detektionszone, des Vergleichens des aufgenommenen Druckbildes dieser Rasterpunkte mit dem sich aus den Rasterbergdaten vorherbestimmten Druckbildern für den gleichen Tonwert und Entscheiden auf der Basis des Vergleichs, ob ein Originalausdruck auf dem bedruckten Gegenstand vorliegt oder nicht.

10. Authentifizierungsverfahren nach Anspruch 9, wobei für den Vergleich zufällig oder vorbestimmt unterschiedliche zu vergleichende Rasterpunkte aus der Detektionszone ausgewählt werden.

11. Authentifizierungsverfahren nach Anspruch 9 oder 10, wobei für den Vergleich zufällig oder vorbestimmt unterschiedliche zu vergleichende Farben aus der Detektionszone ausgewählt werden.

## Claims

1. A method of printing authentication indicators by applying an at least amplitude-modulated halftone print in a detection zone (52) to an object, wherein the printed area of the detection zone (52) comprises adjoining halftone cells (100), in which halftone cells (100) a respective halftone dot (101) is printed from a matrix of printable halftone elements (102), wherein individual tone values (27a, 27b, 27c) of the halftone printing each correspond to a halftone plane of a halftone mountain (1) for a halftone dot (101), wherein the associated halftone plane of the halftone mountain (1) is modified in the detection zone (52) in a predetermined manner for a plurality of tone values (27a, 27b, 27c) of halftone dots (101) to be printed, that a predetermined matrix image (16, 17, 23, 24, 25, 26a, 26b, 26c) of the halftone elements (102) to be printed is assigned to it while the tone value (27a, 27b, 27c) of the print remains constant.

2. The method according to claim 1, **characterized in that** the halftone planes for a plurality of tone values (27a, 27b, 27c) deviate from 0% and 100% with respect to the dot symmetry of the tone values.

3. The method according to claim 1 or 2, **characterized in that** the distribution of the halftone elements (102) for a predetermined tone value (27a, 27b, 27c) in the matrix of a halftone cell (100) is selected from the matrix images of a distribution group comprising a corner (16, 17, 18, 11') of a halftone cell, an edge line (25, 26a ,28a) of a halftone cell, a C (23), an L (28b), a T (24, 26b) or a non-point symmetric and non-axis symmetric printing form (26b, 26c, 28c).

4. The method according to claim 3, **characterized in that** the distribution of the halftone elements (102) in a halftone mountain (1) changes from the tone value 100% to the tone value 0% from the dot-symmetric solid print via a first matrix image from said distribution group to at least a second different matrix image from said distribution group.

5. The method according to any one of claims 1 to 4, **characterized in that** two or more detection zones (52) are provided, wherein the halftone mountains for the same colour in each two detection zones (52) are equal to or different from each other.

6. The method according to any one of claims 1 to 5, **characterized in that** the halftone mountains for different colours are the same or different from each other.

7. The method according to any one of claims 1 to 5, **characterized in that** the modified matrix images for halftones are designed in the range of 40 to 90%.

8. The method according to claim 7, **characterized in that** the modified matrix images are designed for halftones in the range of 50 to 80%.

9. A authenticating method of an article printed according to any one of claims 1 to 8, comprising providing a portable image capture device having a microprocessor for executing an authentication program, providing the resulting print images predetermined from halftone mountain data for a predetermined number of halftone dots of the printed article from a detection zone for a plurality of tone values, and providing a computer program for comparing captured halftone dots with the resulting print images predetermined from the halftone mountain data for the plurality of predetermined tone values; the method comprising the further steps of taking an image of a detection zone of the printed article, selecting a predetermined number of halftone dots in said detection zone, comparing the taken print image of said halftone dots with the print images predetermined from the halftone mountain data for the same tone value, and deciding on the basis of the comparison whether or not there is an original print on the printed article.

10. The authentication method according to claim 9, wherein different halftone dots to be compared are randomly or predeterminedly selected from the detection zone for the comparison.

11. The authentication method according to claim 9 or 10, wherein different colours to be compared are randomly or predeterminedly selected from the detection zone for the comparison.

## Revendications

1. Procédé d'impression d'indices d'authentification par application d'une impression en demi-teinte modulée au moins en amplitude dans une zone de détection (52) sur un objet, la zone imprimée de la zone de détection (52) comprenant des cellules de demi-teinte adjacentes (100), dans lesquelles cellules de demi-teinte (100) un point de demi-teinte respectif (101) est imprimé à partir d'une matrice d'éléments de demi-teinte imprimables (102), des valeurs de ton individuel (27a, 27b, 27c) de l'impression en demi-teinte correspondent chacune à un plan de demi-teinte d'une montagne de demi-teinte (1) pour un point de demi-teinte (101), où dans la zone de détection (52) le plan de demi-teinte associé à la montagne de demi-teinte (1) est modifié d'une manière prédéterminée pour une pluralité de valeurs de ton (27a, 27b, 27c) de points de demi-teinte (101) à imprimer, qu'une image de matrice prédéterminée (16, 17, 23, 24, 25, 26a, 26b, 26c) des éléments de demi-teinte (102) à imprimer lui est attribuée tandis que la valeur de ton (27a, 27b, 27c) de l'impression reste constante.

2. Procédé selon la revendication 1, **caractérisé en ce que** les plans de demi-teinte pour une pluralité de valeurs de tons (27a, 27b, 27c) s'écartent de 0 % et de 100 % par rapport à la symétrie centrale des valeurs de tons.

3. Procédé selon la revendication 1 ou 2, **caractérisé en ce que** la distribution des éléments en demi-teinte (102) pour une valeur de ton prédéterminée (27a, 27b, 27c) dans la matrice d'une cellule en demi-teinte (100) est sélectionnée à partir des images de matrice d'un groupe de distribution, comprenant un coin (16, 17, 18, 11') d'une cellule de demi-teinte, une ligne de bord (25, 26a ,28a) d'une cellule de demi-teinte, un C (23), un L (28b), un T (24, 26b) ou une forme d'impression n'avant ni une symétrique centrale ni une symétrique axiale (26b, 26c, 28c).

4. Procédé selon la revendication 3, **caractérisé en ce que** la distribution des éléments de demi-teinte (102) dans une montagne de demi-teinte (1) change de la valeur de tons 100% à la valeur de tons 0% à partir de l'impression solide en symétrique centrale via une première image de matrice dudit groupe de distribution à au moins une deuxième image de matrice différente dudit groupe de distribution.

5. Procédé selon l'une quelconque des revendications 1 à 4, **caractérisé en ce que** deux ou plusieurs zones de détection (52) sont prévues, les montagnes de demi-teinte pour la même couleur dans chacune de deux zones de détection (52) respectives étant égaux ou différents les uns des autres.

6. Procédé selon l'une quelconque des revendications 1 à 5, **caractérisé en ce que** les montagnes de demi-teinte pour différentes couleurs sont identiques ou différents les uns des autres.

7. Procédé selon l'une quelconque des revendications 1 à 5, **caractérisé en ce que** les images de matrice modifiées sont conçues pour des demi-teintes allant de 40 à 90%.

8. Procédé selon la revendication 7, **caractérisé en ce que** les images de matrice modifiées sont conçues pour des demi-teintes allant de 50 à 80%.

9. Procédé d'authentification d'un article imprimé selon l'une quelconque des revendications 1 à 8, comprenant la fourniture d'un dispositif de capture d'image portable ayant un microprocesseur pour exécuter un programme d'authentification, la fourniture des images d'impression résultantes prédéterminées à partir de données de montagnes de demi-teintes pour un nombre prédéterminé de points de demi-teintes de l'article imprimé à partir d'une zone de détection pour une pluralité de valeurs de ton, et la fourniture d'un programme informatique pour comparer les points de demi-teintes capturés avec les images d'impression résultantes prédéterminées à partir des données de montagnes de demi-teintes pour la pluralité de valeurs de ton prédéterminées ; le procédé comprenant les étapes supplémentaires suivantes de la prise d'une image d'une zone de détection de l'article imprimé, de la sélection d'un nombre prédéterminé de points de demi-teinte dans ladite zone de détection, de la comparaison de l'image d'impression prise desdits points de demi-teinte avec les images d'impression prédéterminées à partir des données de montagne de demi-teinte pour la même valeur de ton, et de la décision sur la base de la comparaison s'il y a ou non une impression originale sur l'article imprimé.

10. Procédé d'authentification selon la revendication 9, dans lequel différents points de demi-teinte à comparer sont sélectionnés de manière aléatoire ou prédéterminée dans la zone de détection pour la comparaison.

11. Procédé d'authentification selon la revendication 9 ou 10, dans lequel différentes couleurs à comparer sont sélectionnées de manière aléatoire ou prédéterminée dans la zone de détection pour la comparaison.
